# EUROPEAN PATENT SPECIFICATION

(11) **EP 3 147 872 B1**
(45) Date of publication and mention of the grant of the patent: **01.05.2019**
(21) Application number: 16188920.9
(22) Date of filing: 15.09.2016
(51) Int. Cl.: G07C 9/00

(54) **INTERCOM SYSTEM, INTERCOM MASTER DEVICE, AND COMMUNICATION METHOD**
GEGENSPRECHSYSTEM, GEGENSPRECHMASTERVORRICHTUNG UND KOMMUNIKATIONSVERFAHREN
SYSTÈME D'INTERCOM, DISPOSITIF DE CONTRÔLE DE L'INTERCOM ET PROCÉDÉ DE COMMUNICATION

(30) Priority: 28.09.2015 JP 2015190077
(43) Date of publication of application: 29.03.2017
(73) Proprietor: Panasonic Intellectual Property Management Co., Ltd., Osaka-shi, Osaka 540-6207 (JP)
(72) Inventor: HAMASAKI, Toshiyuki, Osaka, 540-6207 (JP); KOYAMA, Kazuhiro, Osaka, 540-6207 (JP); UE, Chikashi, Osaka, 540-6207 (JP); MATSUO, Kotaro, Osaka, 540-6207 (JP)
(74) Representative: Eisenführ Speiser

(56) References cited:
- EP-A2- 1 806 703
- US-A1- 2002 030 583
- US-A1- 2009 302 995
- Unknown: "Wireless Security System Installation & Programming Instructions 2GIG-CP2 STANDARD FOR ALARM LOCATION", , 22 August 2014 (2014-08-22), XP055465869, Retrieved from the Internet: URL:https://www.homecontrols.com/homecontr ols/products/pdfs/LN-2GIG/LN2GIGCP2-Instru ctions.pdf [retrieved on 2018-04-10]
- "2GIG GO!Control Installation & Programming -Technical Training", youtube, 22 August 2014 (2014-08-22), page 1 pp., XP054978243, Retrieved from the Internet: URL:https://www.youtube.com/watch?v=HhdG0W QmUqs [retrieved on 2018-04-11]

## Description

### BACKGROUND

### 1. Technical Field

The present disclosure relates to an intercom system, an intercom master device, and a communication method.

### 2. Description of the Related Art

US 2002/0030583 A1 discloses a door control device based on non-touch non-contact charging method, which is applied to a home automation system including an intercom for allowing communication between a visitor and an occupant. The door control device comprises an interior unit and an exterior unit located at inside and outside the door, respectively, without using electric wires. The interior unit includes a first converter for converting a first AC signal having a first frequency into a DC signal, a second converter for converting the DC signal into a second AC signal having a second frequency in which a predetermined control signal is inserted, and a primary transformer to which the second AC signal with the control signal is applied. The exterior unit includes a secondary transformer to which the second AC signal with the control signal from the primary transformer is applied as an induced current, a rectifier for separating the control signal from the signal provided from the secondary transformer, and simultaneously rectifying the same, a charger to which the rectified signal is provided, and a microprocessor to which the separated control signal is provided for analyzing the control signal and providing a door lock with a door open signal according to the analyzed result.

US 2009/0302995 A1 relates to a digital door, and more particularly, to a digital door which is capable of improving security and convenience using network environments, improving safety in an emergency such as a fire, and improving aesthetic and functionality of a door. The digital door includes: a power supply unit that supplies power to the door; an input unit that that mechanically or electromagnetically receives an input signal from a user and converts the received input signal into digital data; a multi-lock unit that has a multi-locking system constituted by a plurality of locks and locks/unlocks the door; a communication unit that connects the door with a network; a memory unit that stores a control program and related data, fire and security-related messages, image and voice data inputted from the input unit; an audio unit that generates an alarm sound according to the messages; and a controller that is connected to the power supply unit, the multi-lock unit, the communication unit, the memory unit and the audio unit for controlling the digital door.

EP 1 806 703 A2 discloses an intelligent access authentication system and method. The intelligent access authentication system includes a door lock that can be locked and released in a predetermined manner, a door phone for communicating with the visitor; a smart communicator which configures access approval levels of expected visitors and access authentication information for each access approval level, communicates with the visitor, and controls the door lock, and a home network server which stores the access approval levels of expected visitors and access authentication information for each access approval level received from the smart communicator, checks the access approval level of the visitor attempting to release the door lock by referring to previously stored information, and transmits a door lock operating command to the door lock according to the access approval level of the visitor. In the present invention, the resident can check the visitor and control the door lock to be released according to the access approval level of the visitor, even at a remote location.

Intercom systems, in each of which identification of a visitor to an entrance or unlocking of an entrance door can be performed from an indoor intercom master device, have come into wide use in the related art. Recently, technologies that make it possible to perform visitor identification or a door unlocking operation from a communication terminal, such as a smartphone, have received attention. In the technology (which is hereinafter referred to as the "related art") that is disclosed in Japanese Patent Unexamined Publication No. 2005-23689, when receiving a door unlocking command from a communication terminal, a service center apparatus performs authentication processing on a communication terminal, and in a case where success in the authentication takes place, provides an instruction to door-unlock an entrance door that is in advance associated with the communication terminal. In the related art, for example, it is possible that when a child goes home, his/her parent at work carries out a telephone conversation with the child and unlocks an entrance door with remote control in order for the child to enter the house.

However, there is room for improvement in terms of security in the related art. For example, in a case where the communication terminal is acquired by a third communication party in a destination place, or in a case where a door unlocking command that imitates terminal information of a genuine communication terminal is transmitted from a communication terminal of a third party, there is a likelihood that an entrance door will be unlocked illegally. Furthermore, particularly, in a case where an operation is performed from the destination place using a public network, such as the Internet, there is an increased likelihood that the entrance door will be unlocked illegally.

### SUMMARY

An object of the present disclosure is to provide an intercom system, an intercom master device, and a communication method in which it is possible that an operation of unlocking an entrance door is performed from a communication terminal.

According to an aspect of the present disclosure, there is provided an intercom system as defined in claim 1.

According to another aspect of the present disclosure, there is provided an intercom master device as defined in claim 5. According to still another aspect of the present disclosure, there is provided a communication method as defined in claim 6.

According to the present disclosure, an operation of unlocking an entrance door can be performed from a communication terminal in a state where a higher level of security is achieved.

### BRIEF DESCRIPTION OF THE DRAWINGS

FIG. 1 is a systematic constitutional diagram illustrating an example of a constitution of an intercom system according to an embodiment of the present disclosure;
FIG. 2 is a block diagram illustrating an example of a constitution of an entrance slave device according to the present embodiment;
FIG. 3 is a block diagram illustrating an example of a constitution of an intercom master device according to the present embodiment;
FIG. 4 is a diagram illustrating an example of a terminal information table according to the present embodiment;
FIG. 5 is a block diagram illustrating an example of a constitution of a wireless terminal according to the present embodiment;
FIG. 6 is a flowchart illustrating an example of operation of the intercom master device according to the present embodiment;
FIG. 7 is a plan diagram illustrating an example of a terminal selection screen according to the present embodiment;
FIG. 8 is a plan diagram illustrating an example of a configuration selection screen according to the present embodiment;
FIG. 9 is a flowchart illustrating an example of connection-in-progress processing according to the present embodiment;
FIG. 10 is a sequence diagram illustrating an example of operation of the intercom system in a case where an unlocking operation is performed by the wireless terminal for which approval of unlocking is configured, according to the present embodiment;
FIG. 11 is a plan diagram illustrating an example of a display state of the wireless terminal when a terminal-destined visiting notification is received, according to the present embodiment;
FIG. 12 is a plan diagram illustrating an example of the display state of the wireless terminal when a telephone conversation is carried out, according to the present embodiment;
FIG. 13 is a plan diagram illustrating an example of the display state of the wireless terminal when an unlocking instruction operation is performed, according to the present embodiment;
FIG. 14 is a plan diagram illustrating an example of the display state of the wireless terminal when an unlocking operation succeeds, according to the present embodiment;
FIG. 15 is sequence diagram illustrating an example of the operation of the intercom system in a case where the unlocking operation is performed by the wireless terminal for which disapproval of the unlocking is configured, according to the present embodiment; and
FIG. 16 is a plan diagram illustrating an example of the display state of the wireless terminal when the unlocking operation fails, according to the present embodiment.

### DETAILED DESCRIPTION

An embodiment of the present disclosure will be described in detail blow referring to the drawings.

### System Overview

First, an overview of an intercom system according to the embodiment the present disclosure is described.

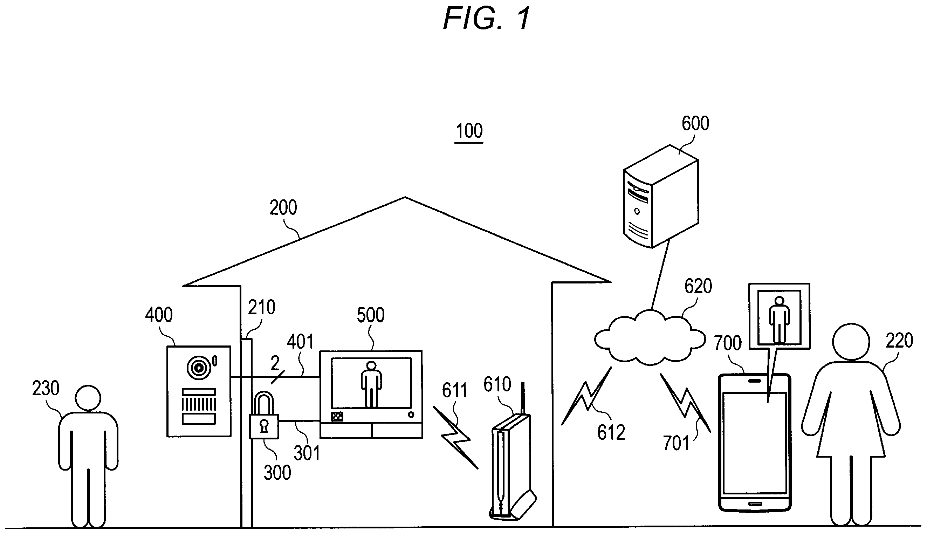

FIG. 1 is an example of a constitution of the intercom system according to the present embodiment. At this point, a surrounding environment of the constitution of the system is illustrated together as well.

As is illustrated in FIG. 1, intercom system 100, for example, has electronic lock 300 that is provided to entrance door 210 of building 200 that is a house of user 220, and entrance slave device 400 that is installed in the vicinity of entrance door 210, and intercom master device 500 that is installed inside of building 200.

Electronic lock 300 is a locking device that performs unlocking/locking of entrance door 210, in response to an unlocking request/locking request that is an electric signal, in addition to performing a normal key operation on a keyhole. Electronic lock cord 301 that is a JEM-A standard cord is laid between electronic lock 300 and intercom master device 500. It is possible that under the control of intercom master device 500, electronic lock 300 performs the unlocking/locking.

Entrance slave device 400 includes a call button, a speaker, a microphone, and a digital camera. Two-line cable 401 that is made from a pair of copper wires is laid between entrance slave device 400 and intercom master device 500. Entrance slave device 400 has a function of capturing an image of the vicinity of an entrance and transmitting the captured image to intercom master device 500, in addition to a function of making a call and carrying out a telephone conversation. Two-line cable 401, for example, is a communication cable that has been installed in the past in building 200 and is used for an old-type intercom system which does not perform transfer of an image signal.

Intercom master device 500 includes a speaker, a touch panel-attached liquid crystal display, a monitor button, a telephone conservation button, a microphone, and locking and unlocking buttons. In addition to a function of answering a call (starting to carry out a telephone conversation), intercom master device 500 has a function of displaying the image of the vicinity of the entrance that is sent from entrance slave device 400 and a function of enabling electronic lock 300 to perform an operation of unlocking/locking entrance door 210 on intercom master device 500 itself.

Furthermore, intercom system 100 has wireless communication router 610 that is installed inside of building 200, authentication server 600 that is connected to public network 620, such as the Internet, and wireless terminal (a communication terminal) 700, such as a smartphone, that is possible to carry outside of building 200.

Wireless communication router 610 connects to each of intercom master device 500 and public network 620 through wireless communication lines 611 and 612, and performs relay of communication between intercom master device 500 and public network 620. Wireless communication line 611, for example, is a Wi-Fi (a registered trademark) line, and wireless communication line 612, for example, is a Long Term Evolution (LTE) line.

Authentication server 600 connects to public network 620 through wireless communication router 610, and performs communication with wireless communication router 610 through intercom master device 500. Furthermore, authentication server 600 performs authentication processing on a wireless terminal (for example, wireless terminal 700) that has access to intercom master device 500, and, in a case where succession in authentication takes place, performs relay of communication between the wireless terminal and intercom master device 500.

Wireless terminal 700 makes a connection to public network 620 through wireless communication line 701, and has access to intercom master device 500 through authentication server 600. Wireless communication line 701, for example, is the LTE line. It is possible that wireless terminal 700 makes a connection to intercom master device 500 through public network 620, authentication server 600, and wireless communication router 610, from inside and outside building 200.

Furthermore, wireless terminal 700 includes a speaker, a touch panel-attached liquid crystal display, a microphone, a terminal monitor button, a terminal telephone conversation button, a terminal unlocking button, and a terminal locking button. These buttons, for example, are image buttons that are displayed on the touch panel-attached liquid crystal display.

Intercom master device 500 described above performs transferring of an image, audio, and various pieces of control information between entrance slave device 400 and wireless terminal 700, receives a terminal's unlocking instruction from wireless terminal 700, and thus unlocks electronic lock 300. That is, intercom master device 500 described above has a function of making the answering of a call (starting to carry out a telephone conversation), the displaying of the image of the vicinity of an entrance, and the unlocking/locking operation by electronic lock 300 in wireless terminal 700, as well.

In FIG. 1, only one wireless terminal 700 is illustrated, but for example, and multiple wireless terminals 700 that can be able to make connections to intercom master device 500 are present in intercom system 100.

Entrance slave device 400 and intercom master device 500, for example, packetize various pieces of data that are target for transmission to the other party, and then perform coding on a result of the marketization, based on a technology that is disclosed in Japanese Patent Unexamined Publication No. 2005-23689, and, transmits a result of the coding to the other party using packet transfer. At this time, entrance slave device 400 and intercom master device 500 each perform transfer in a baseband, using time division duplex (time division bidirectional transfer). That is, entrance slave device 400 and intercom master device 500 alternately switch between transmission and reception with the passage of time, and perform the transmission during an interval during which the other party does not perform the transmission.

Accordingly, intercom system 100 can realize transmission of a high-quality image audio signal from entrance slave device 400 to intercom master device 500, utilizing existing two-line cable 401 effectively. However, a scheme for communication between entrance slave device 400 and intercom master device 500 is not limited to the example, and various communication schemes that are well known can be employed as such a scheme.

It is possible that while user 220 is not only inside of building 200 but also outside of building 200, when visitor 230 is at the entrance, intercom system 100 notifies user 220 of the fact that visitor 230 is at the entrance. In intercom system 100, user 220 has a conversation with visitor 230 while checking an intercom image, and in a case where visitor 230 is identified as a user 220's child and so forth, it is possible that an operation of unlocking entrance door 210 is performed remotely.

However, in a case where the wireless terminal 700 provides an instruction for unlocking, through public network 620, as described above, there is room for improvement in terms of security. Accordingly, an operation of configuring whether or not the unlocking of electronic lock 300 with the terminal's unlocking instruction is approved is performed on intercom master device 500, and the unlocking from wireless terminal 700 is limited according to contents of the configuration, thereby achieving the security.

For example, in a case where wireless terminal 700 is acquired by a third party, or in a case where a terminal's illegal unlocking instruction is transmitted from a third communication terminal, a configuration is provided in such a manner that the unlocking from wireless terminal 700 is not approved. Thus, entrance door 210 can be prevented from being illegally unlocked. Furthermore, a configuration is provided in such a manner that the unlocking from wireless terminal 700 that a child carries with him/her is not approved, and thus entrance door 210 can be prevented from being unlocked at an inappropriate timing. Therefore, intercom system 100 can realize an unlocking operation from wireless terminal 700 in a state where a likelihood that entrance door 210 will be illegally unlocked is decreased.

### Constitution of Each Device

At this point, a constitution of a main device of intercom system 100 is described. Each device that constitutes intercom system 100, for example, has a Central Processing Unit (CPU), a storage medium, such as a Read Only Memory (ROM) in which a control program is stored, a memory for operation, such as a Random Access Memory (RAM), and a communication circuit, which are not illustrated. In this case, a function of each unit that will be described below is realized by the CPU executing the control program.

### Constitution of the Electronic Lock

A constitution of a well-known electronic lock can be employed as a constitution of electronic lock 300. For example, electronic lock 300 is configured to include a JEM-A adapter that includes a JEM-A standard HA terminal-A to which one end of electronic lock cord 301 is connected and to switch between unlocked and locked states according to an input signal to a terminal.

With this configuration, under the control of intercom master device 500, electronic lock 300 can perform the unlocking/locking of entrance door 210.

### Constitution of the Entrance Slave Device

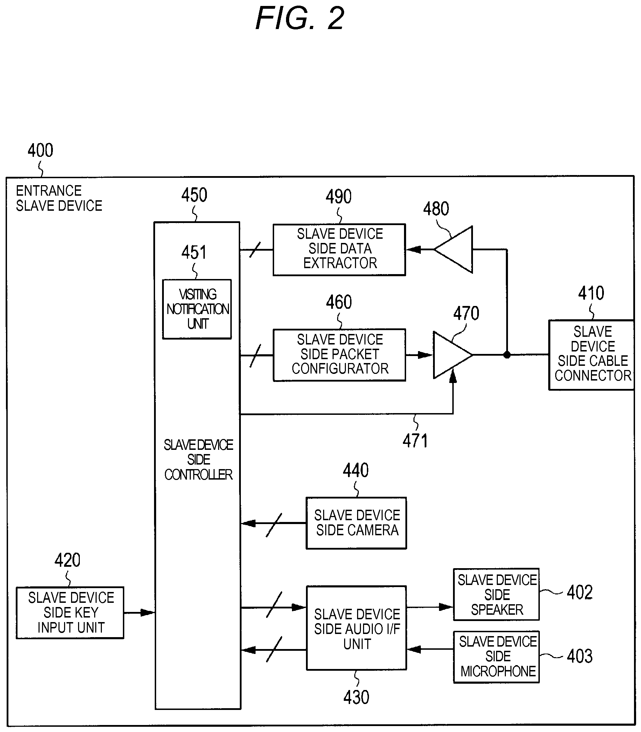

FIG. 2 is a block diagram illustrating an example of a constitution of entrance slave device 400.

In FIG. 2, entrance slave device 400 has slave device side cable connector 410, slave device side key input unit 420, slave device side speaker 402, slave device side microphone 403, slave device side audio interface (I/F) 430, and slave device side camera 440. Furthermore, entrance slave device 400 has slave device side controller 450, slave device side packet configurator 460, slave device side transmission driver 470, slave device side reception driver 480, and slave device side data extractor 490.

Slave device side cable connector 410, for example, includes a connection terminal for the two-line cable, and connects between the entrance side end of two-line cable 401, and slave device side transmission driver 470 and slave device side reception driver 480, in a state where a signal is transferable.

Slave device side key input unit 420 includes the call button described above, and when the call button is operated, a signal indicating that the call button is operated is output to slave device side controller 450.

Slave device side speaker 402 converts an analog audio data that is output from slave device side audio I/F unit 430, into audio and outputs a result of the conversion.

Slave device side microphone 403 collects ambient audio, converts the ambient audio into analog audio data, and outputs a result of the conversion to slave device side audio I/F unit 430.

Slave device side audio I/F unit 430 converts digital audio data that is output from slave device side controller 450, into analog audio data, performs adjustment of a signal level of the analog audio data, and outputs the signal level-adjusted analog audio data to slave device side speaker 402. Furthermore, slave device side audio I/F unit 430 adjusts a signal level of analog audio data that is output from slave device side microphone 403, converts the signal level-adjusted analog audio data into digital audio data, and outputs a result of the conversion to slave device side controller 450. The analog conversion and the digital conversion are performed by A/D and D/A converters (not illustrated), respectively.

Slave device side audio I/F unit 430 performs prescribed audio compression processing on data that results from performing the digital conversion on analog audio data which is output from slave device side microphone 403, and may output data that is obtained by performing the prescribed audio compression processing, as digital audio data, to slave device side controller 450. Furthermore, in a case where the digital audio data that is output from slave device side controller 450 is data that is obtained by performing the prescribed audio compression processing, slave device side audio I/F unit 430 performs prescribed audio decompression processing on the data, and then performs the digital/analog conversion.

Slave device side camera 440 includes the digital camera described above, captures an image of the entrance, generates digital image data, and outputs the generated digital image data to slave device side controller 450. Slave device side camera 440 may be equipped with an encoder module. That is, slave device side camera 440 may output data that is obtained by performing prescribed moving-image compression processing, such as H.264, on the image data that is output from the digital camera, as digital image data, the slave device side controller 450.

When visitor 230 is at entrance door 210, visiting notification unit 451 of slave device side controller 450 transmits a visiting notification indicating that visitor 230 is at entrance door 210, to intercom master device 500. For example, when a signal indicating the call button is operated is output from slave device side key input unit 420, visiting notification unit 451 transmits the visiting notification to intercom master device 500.

Visiting notification unit 451 may determine the presence or absence of visitor 230 at entrance door 210 based on an output signal of a human motion sensor that is installed in the vicinity of entrance door 210 or on human motion detection processing and the like on an image obtained by slave device side camera 440.

Furthermore, when visitor 230 is at entrance door 210 or when an audio image transmission instruction is received from intercom master device 500, slave device side controller 450 starts prescribed control processing for monitoring the vicinity of the entrance and realizing an image-accompanied telephone conversation. The control processing is performed by transmitting to intercom master device 500 the digital audio data and the digital image data that are output from slave device side audio I/F unit 430 and slave device side camera 440. Furthermore, the control processing is performed by outputting to slave device side audio I/F unit 430 the digital audio data that is received from intercom master device 500.

When transmitting the visiting notification or when receiving the audio image transmission instruction, slave device side controller 450 performs control in such a manner that slave device side speaker 402, slave device side microphone 403, slave device side audio I/F unit 430, and slave device side camera 440 start to operate.

Furthermore, slave device side controller 450 may transmit various pieces of control data relating to operation of entrance slave device 400 or operation of intercom master device 500, to intercom master device 500. The control data, for example, includes sensing information of a temperature sensor that is included in various sensor devices (not illustrated), such as entrance slave device 400, an illuminance sensor, and a human motion sensor.

Slave device side packet configurator 460 suitably divides and packetizes the digital audio data and the digital image data (and the control data) that are output from slave device side controller 450, codes generated packet data, and generates an uplink signal that is destined for intercom master device 500. Slave device side packet configurator 460 outputs the generated uplink signal to slave device side transmission driver 470.

Slave device side transmission driver 470 buffers the uplink signal that is output from slave device side packet configurator 460, performs adjustment of a signal level of the buffered uplink signal, and transmits the signal level-adjusted signal to intercom master device 500 through slave device side cable connector 410.

Slave device side reception driver 480 buffers a downlink signal that is sent from intercom master device 500 through slave device side cable connector 410, by performing adjustment of a signal level of the downlink signal, and outputs the signal level-adjusted downlink signal to slave device side data extractor 490.

Slave device side data extractor 490 extracts the digital audio data of intercom master device 500, which is included in the downlink signal, from the downlink signal that is output from slave device side reception driver 480, and outputs the extracted digital audio data to slave device side controller 450.

Transmission and reception of various pieces of information between entrance slave device 400 itself and intercom master device 500 by slave device side controller 450 described above are performed through slave device side packet configurator 460, slave device side transmission driver 470, slave device side cable connector 410, slave device side reception driver 480, and slave device side data extractor 490.

However, based on transmission control information that is shared (retained) in advance between entrance slave device 400 itself and intercom master device 500, slave device side controller 450 controls operation of each of slave device side transmission driver 470 and slave device side reception driver 480 in such a manner that the transmission of the uplink signal and the reception of the downlink signal are performed in a time-division manner. The transmission control information is information that stipulates transmission timing and reception timing for each of entrance slave device 400 and intercom master device 500, in time division duplex between entrance slave device 400 and intercom master device 500. According to the transmission control information, control of operation of slave device side transmission driver 470, for example, is performed by outputting enable signal 471 or the like that controls operation (drive of a signal) of slave device side transmission driver 470.

Furthermore, delivery of data between the units described above by entrance slave device 400 is performed with digital transfer, except between slave device side speaker 402 and slave device side microphone 403, and slave device side audio I/F unit 430.

With this configuration, when visitor 230 is at entrance door 210, entrance slave device 400 can transmit the visiting notification to intercom master device 500.

### Constitution of the Intercom Master Device

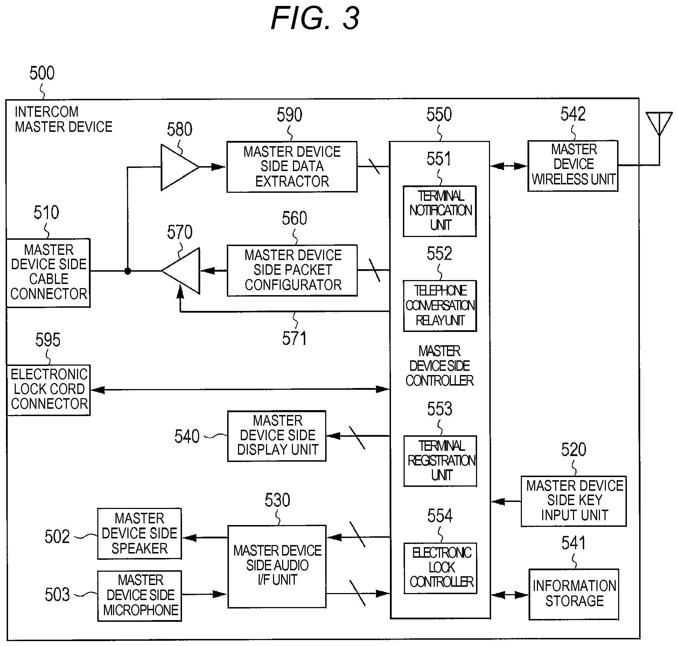

FIG. 3 is a block diagram illustrating an example of a constitution of intercom master device 500.

In FIG. 3, intercom master device 500 has master device side cable connector 510, master device side key input unit 520, master device side speaker 502, master device side microphone 503, master device side audio I/F unit 530, and master device side display unit 540. Furthermore, intercom master device 500 has information storage 541, master device wireless unit 542, master device side controller 550, master device side packet configurator 560, master device side transmission driver 570, master device side reception driver 580, master device side data extractor 590, and electronic lock cord connector 595.

Master device side cable connector 510 includes a connection terminal for the two-line cable, and connects between one indoors-side end of two-line cable 401, and master device side transmission driver 570 and master device side reception driver 580, in a state where a signal is transferable.

Master device side key input unit 520 includes the monitor button and the telephone conversation button, which are described above, and when one of these buttons is operated, outputs a signal indicating that the button is operated, to master device side controller 550.

Master device side speaker 502 converts analog audio data that is output from master device side audio I/F unit 530 into audio, and outputs the resulting audio.

Master device side microphone 503 collects ambient audio, converts the ambient audio into analog audio data, and outputs a result of the conversion to master device side audio I/F unit 530.

Master device side audio I/F unit 530 converts digital audio data that is output from master device side controller 550, into analog audio data, performs adjustment of a signal level of the analog audio data, and outputs the signal level-adjusted analog audio data to master device side speaker 502. Furthermore, master device side audio I/F unit 530 adjusts a signal level of analog audio data that is output from master device side microphone 503, converts the signal level-adjusted analog audio data into digital audio data, and outputs a result of the conversion to master device side controller 550. The analog conversion and the digital conversion are performed by A/D and D/A converters (not illustrated), respectively.

Master device side audio I/F unit 530 may output data that is obtained by performing prescribed audio compression processing on data that results from performing the digital conversion on analog audio data which is output from master device side microphone 503, as digital audio data, to master device side controller 550. Furthermore, in a case where the digital audio data that is output from master device side controller 550 is data that is obtained by performing the prescribed audio compression processing, master device side audio I/F unit 530 may perform prescribed audio decompression processing on the data, and then perform the digital/analog conversion.

Master device side display unit 540 includes the liquid crystal display described above, reproduces the digital image data that is output from master device side controller 550, and displays an image of the entrance. In a case where the digital image data that is output from master device side controller 550 is data that is obtained by performing prescribed moving-image compression processing, prescribed moving-image decompression processing is performed on the data and image displaying of the resulting data is performed.

A terminal information table, in which a telephone conversation with entrance slave device 400 and information relating to wireless terminal 700 that is authorized to perform the unlocking/locking of electronic lock 300 are described, is stored in information storage 541.

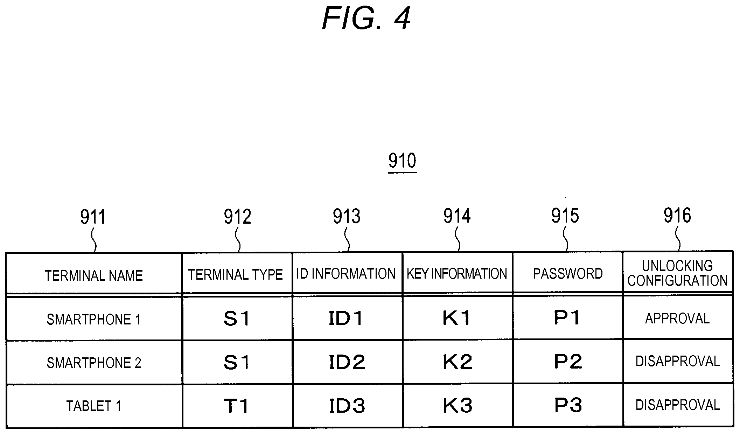

FIG. 4 is a diagram illustrating an example of the terminal information table.

As illustrated in FIG. 4, in terminal information table 910, terminal name 911, terminal type 912, identifier (ID) information 913, key information 914, password 915, and unlocking configuration 916 are described in state of being associated with every wireless terminal 700 that can be able to make a connection to intercom master device 500.

Terminal name 911 is a name of wireless terminal 700. Terminal type 912 is a terminal type of wireless terminal 700. ID information 913 is identification information of wireless terminal 700, which is used for communication using a Media Access Control (MAC) address and the like. Key information 914 is information that is used for encryption and decoding for communication between intercom master device 500 and wireless terminal 700. Password 915 is information that is used for authentication processing for intercom master device 500 and wireless terminal 700. Unlocking configuration 916 is information indicating whether or not the operation of unlocking electronic lock 300 that is performed by wireless terminal 700 is approved.

Terminal name 911 to password 915 are registered in advance, for example, by performing an operation of inputting information into intercom master device 500, or by performing information exchange between intercom master device 500 and wireless terminal 700 using short- or middle-distance wireless communication in the related art. Unlocking configuration 916 is configured, by terminal registration unit 553 that will be described below, to suitably switch between "APPROVAL" and "DISAPPROVAL". It is desirable that unlocking configuration 916 is described "DISAPPROVAL" in an initial state.

For example, unlocking configuration 916 is described as "APPROVAL" in a state of being associated with terminal name 911 that is described as "SMARTPHONE 1". This indicates that the operation of unlocking electronic lock 300 is approved for performance by wireless terminal 700 that has the name described as "SMARTPHONE 1". Furthermore, unlocking configuration 916 is described as "DISAPPROVAL" in a state of being associated with terminal name 911 that is described as "SMARTPHONE 2". This indicates that the operation of unlocking electronic lock 300 is not approved for performance by wireless terminal 700 that has the name described as "SMARTPHONE 2".

The information exchange described above, for example, is performed through command communication over the same Local Area Network (LAN). Specifically, it is possible that wireless terminal 700 switches between enabling and disabling a short- and middle-distance wireless communication function, and when wireless terminal 700 is located within a range where communication with wireless communication router 610 is possible and the function is enabled, wireless terminal 700 makes a direct connection to wireless communication router 610 (is put under the management of the wireless communication router 610). For example, terminal name 911 to password 915 are configured for intercom master device 500, from wireless terminal 700 through wireless communication router 610, under the condition that wireless terminal 700 is put under the management of wireless communication router 610 in the same manner as intercom master device 500. Intercom master device 500 and wireless terminal 700, for example, exchange information using a common gateway interface (CGI) command of a hypertext transfer protocol (HTTP). However, it is desirable that the information is transmitted in a state of being encrypted with a technology such as an advanced encryption standard (AES).

Master device wireless unit 542 in FIG. 3 includes a wireless communication circuit and an antenna, and makes a connection to wireless communication router 610 through wireless communication lines 611 and 612 described above in a manner that makes it possible to communicate with wireless communication router 610 itself. Master device wireless unit 542 makes a connection to wireless terminal 700 through wireless communication router 610, public network 620, and authentication server 600, in a manner that makes it possible to communicate with wireless terminal 700 itself.

When receiving the visiting notification described above from entrance slave device 400, master device side controller 550 outputs prescribed call sound from master device side speaker 502. The output of the call sound, for example, is performed by the master device side controller 550 outputting a digital audio signal for the prescribed call sound to master device side audio I/F unit 530.

In addition, master device side controller 550 starts the monitoring of the vicinity of the entrance and prescribed control processing for realizing an image-accompanied telephone conversation between entrance slave device 400 and intercom master device 500. The control processing is performed by transmitting the digital audio data that is output from master device side audio I/F unit 530 to entrance slave device 400 and by outputting to slave device side audio I/F unit 430 and master device side display unit 540 the digital audio data and the digital image data that are received from entrance slave device 400. However, master device side controller 550 does not perform transmission of the digital audio data to entrance slave device 400 until a signal indicating that the telephone conservation button is operated is output from master device side key input unit 520.

When receiving the visiting notification, master device side controller 550 may perform control in such a manner that master device side speaker 502, master device side microphone 503, master device side audio I/F unit 530, and master device side display unit 540 start to operate.

Furthermore, master device side controller 550 may transmit control data relating to the operation of intercom master device 500 and the operation of entrance slave device 400 to entrance slave device 400. The control data, for example, includes control signals for controlling camera operations (operations, such as data rate setting, panning, tilting, lighting, and filtering) by entrance slave device 400 from intercom master device 500 or an operation by each of various sensor devices that are included in entrance slave device 400. Furthermore, the control data includes a control signal for controlling operation of a device (an electronic lock of a door or the like) that is installed outdoors, through a wireless communication circuit and the like (which are not illustrated) which are included in entrance slave device 400.

In addition, when receiving a log-in request from wireless terminal 700 through authentication server 600, master device side controller 550 performs the authentication processing on wireless terminal 700, based on the log-in information (for example, ID information 913 and password 915 in FIG. 4) that is stored in information storage 541. That is, master device side controller 550, for example, decodes the ID information and the password that are encrypted, which are included in the log-in request, with the key information, and collates results of the decoding with contents of the log-in information. In a case where the success in authentication takes place, telephone conversation relay unit 552 makes a connection to wireless terminal 700 through authentication server 600.

When the visiting notification described above is received from entrance slave device 400 in a state where the connection to wireless terminal 700 is made, along with the processing described above, master device side controller 550 performs transmission of a terminal-destined visiting notification to wireless terminal 700 in terminal notification unit 551. Furthermore, whenever receiving the visiting notification, terminal notification unit 551 notifies electronic lock controller 554, which will be described below, that the visiting notification is received.

When a request to start peer-to-peer communication (which is expressed below as P2P communication) is transmitted from wireless terminal 700, telephone conversation relay unit 552 of master device side controller 550 determines whether or not to accept the request. In a case where the request is accepted, telephone conversation relay unit 552 transmits a response that the request is accepted to wireless terminal 700, and starts to transfer an image that is sent from entrance slave device 400, to wireless terminal 700.

Furthermore, when receiving a telephone conversation starting instruction from wireless terminal 700, telephone conversation relay unit 552 starts telephone conversation relay processing for realizing an image-accompanied telephone conversation between entrance slave device 400 and wireless terminal 700. The telephone conversation relay processing is performed by transmitting to entrance slave device 400 the digital audio data that is received from wireless terminal 700 and by transmitting to wireless terminal 700 the digital audio data and the digital image data that are received from entrance slave device 400.

Furthermore, when receiving from wireless terminal 700 an image transmission request that requests transmission of the image of the vicinity of the entrance, telephone conversation relay unit 552 transmits the audio image transmission instruction described above to entrance slave device 400. Telephone conversation relay unit 552 transmits to wireless terminal 700 the digital image data that is received from entrance slave device 400.

An operation of configuring whether or not to approve the operation of unlocking electronic lock 300, which is performed by wireless terminal 700, is performed on terminal registration unit 553 of master device side controller 550. For example, the terminal registration unit 553 displays a terminal configuration screen on the touch panel-attached liquid crystal of intercom master device 500. The terminal configuration screen is a user interface for configuring unlocking approval/disapproval for every wireless terminal 700 from a user (for example, user 220) of intercom system 100. Terminal registration unit 553 resets unlocking configuration 916 (refer to FIG. 4) in terminal information table 910 according to an operation that is performed on the terminal configuration screen. The terminal configuration screen will be described in detail below.

When receiving the terminal's unlocking instruction from wireless terminal 700 through master device wireless unit 542, electronic lock controller 554 of master device side controller 550 transmits the unlocking request to electronic lock 300 of entrance door 210 and unlocks electronic lock 300. However, when receiving the terminal's unlocking instruction, electronic lock controller 554 refers to terminal information table 910 (refer to FIG. 4), and determines whether or not the approval of the unlocking operation is configured for wireless terminal 700 that is a transmission source of the terminal's unlocking instruction. Electronic key controller 554 causes electronic lock 300 to be unlocked under the condition that the approval of the unlocking operation is configured. Furthermore, in a case where electronic lock 300 is unlocked with the unlocking request, when a prescribed time, for example, 20 seconds elapses, it is desirable that electronic lock controller 554 transmits the locking request to electronic lock 300 of entrance door 210 and locks electronic lock 300.

Master device side packet configurator 560 suitably divides and packetizes the digital audio data (and the control data) that is output from master device side controller 550, codes generated packet data, and generates a downlink signal. Master device side packet configurator 560 outputs the generated downlink signal to master device side transmission driver 570.

Master device side transmission driver 570 buffers the downlink signal that is output from master device side packet configurator 560, performs gain adjustment, and transmits a result of the gain adjustment to entrance slave device 400 through master device side cable connector 510.

Master device side reception driver 580 buffers an uplink signal that is sent from entrance slave device 400 through master device side cable connector 510, by performing the gain adjustment, and outputs a result of the buffering to master device side data extractor 590.

Master device side data extractor 590 extracts the digital audio data and the digital image data of entrance slave device 400, which are included in the uplink signal, from the downlink signal that is output from master device side reception driver 580, and outputs to master device side controller 550 the digital audio data and the digital image data that are extracted.

Electronic lock cord connector 595, for example, includes a JEM-A adapter that includes a JEMA standard HA terminal-A, and connects between one end of electronic lock cord 301 and master device side controller 550, in a state where a signal is transferable.

Transmission and reception of various pieces of information between intercom master device 500 itself and entrance slave device 400 by master device side controller 550 described above are performed through master device side packet configurator 560, master device side transmission driver 570, master device side cable connector 510, master device side reception driver 580, and master device side data extractor 590.

However, master device side controller 550 retains the transmission of control information described above in advance, and controls operation of master device side transmission driver 570 in a time-division manner that the transmission of the downlink signal and the reception of the uplink signal are performed in a time-division manner. For example, according to the transmission control information, the control is performed by outputting enable signal 571 and the like that control the operation (the drive of the signal) of master device side transmission driver 570.

Furthermore, transmission and reception of various pieces of information between intercom master device 500 itself and wireless terminal 700 by master device side controller 550 described above are performed through master device wireless unit 542. The transmission and reception between intercom master device 500 itself and electronic lock 300 by master device side controller 550 described above are performed through electronic lock cord connector 595.

Furthermore, delivery of data between the units described above by intercom master device 500 is performed with the digital transfer, except between master device side speaker 502 and master device side microphone 503, and master device side audio I/F unit 530.

With this configuration, an operation of configuring whether or not the unlocking of electronic lock 300 that is performed by wireless terminal 700 is approved can be performed by the user on intercom master device 500. When receiving the visiting notification from entrance slave device 400, intercom master device 500 can transmit the terminal-destined visiting notification to wireless terminal 700, and when receiving the terminal's unlocking instruction from wireless terminal 700, can unlock electronic lock 300 under the condition that the approval of the unlocking operation is configured.

### Constitution of a Wireless Communication Router

As a constitution of wireless communication router 610, a constitution of a well-known wireless communication router that relays communication in a wireless manner can be employed.

### Constitution of an Authentication Server

As a constitution of authentication server 600, a constitution of the well-known wireless communication router that relays the communication and an authentication server can be employed.

Authentication server 600, for example, has an authentication processor (not illustrated) that performs the authentication processing on a wireless terminal (for example, wireless terminal 700) that requests access to intercom master device 500, based on authentication information that is exchanged in advance between authentication server 600 itself and wireless terminal 700. As the authentication processing, for example, Secure Sockets Later (SSL) authentication, authentication using a password that is exchanged in advance between authentication server 600 and wireless terminal 700, or the like can be employed.

Authentication server 600 has a terminal communication relay unit (not illustrated) that, under the condition that the success in authentication of the wireless terminal 700 takes place, establishes a connection to wireless terminal 700 and performs relay of the communication between wireless terminal 700 and intercom master device 500 (through wireless communication router 610).

When receiving the terminal-destined visiting notification from intercom master device 500, authentication server 600 transfers the notification to wireless terminal 700, but the transfer may take place before or after the communication between wireless terminal 700 and intercom master device 500.

### Constitution of the Wireless Terminal

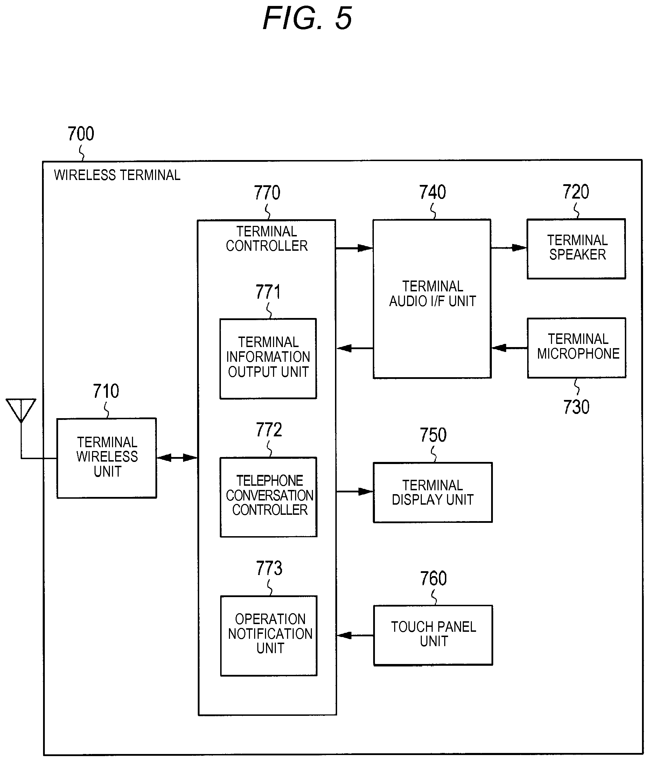

FIG. 5 is a block diagram illustrating an example of a constitution of wireless terminal 700.

In FIG. 5, wireless terminal 700 has terminal wireless unit 710, terminal speaker 720, terminal timer 730, terminal audio I/F unit 740, terminal display unit 750, touch panel unit 760, and terminal controller 770.

Terminal wireless unit 710 includes a wireless communication circuit and an antenna, and makes a connection to a wireless base station (not illustrated) that is connected to public network 620 through wireless communication line 701 described above in a manner that makes it possible to communicate with the wireless base station itself. Terminal wireless unit 710 makes a connection to authentication server 600 through the wireless base station and public network 620 in a manner that makes it possible to communicate with authentication server 600 itself. In addition, terminal wireless unit 710 makes a connection to intercom master device 500 through authentication server 600, public network 620, and wireless communication router 610 in a manner that makes it possible to communicate with intercom master device 500 itself while the relay of the communication by authentication server 600 is performed.

Terminal speaker 720 converts analog audio data that is output from terminal audio I/F unit 740 into audio, and outputs a result of the conversion.

Terminal timer 730 collects ambient audio, converts the ambient audio into analog audio data, and outputs a result of the conversion to terminal audio I/F unit 740.

Terminal audio I/F unit 740 converts digital audio data that is output from terminal controller 770, into analog audio data, performs adjustment of a signal level of the analog audio data, and outputs the signal level-adjusted analog audio data to terminal speaker 720. Furthermore, terminal audio I/F unit 740 adjusts a signal level of analog audio data that is output from terminal timer 730, into digital audio data, converts the signal level-adjusted analog audio data, and outputs a result of the conversion to terminal controller 770. The analog conversion and the digital conversion are performed by A/D and D/A converters (not illustrated), respectively.

Terminal audio I/F unit 740 may output data that is obtained by performing prescribed audio compression processing on data that results from performing the digital conversion on analog audio data which is output from terminal timer 730, as digital audio data, to terminal controller 770. Furthermore, in a case where the digital audio data that is output from terminal controller 770 is data that is obtained by performing the prescribed audio compression processing, terminal audio I/F unit 740 may perform prescribed audio decompression processing on the data, and then perform the digital/analog conversion.

The terminal display unit 750 includes a liquid crystal display portion of the touch panel-attached liquid crystal display that is described above, and reproduces digital image data that is output from terminal controller 770. In a case where the digital image data that is output from terminal controller 770 is data that is obtained by performing prescribed moving-image compression processing, prescribed moving-image decompression processing is performed on the data and image displaying of the resulting data is performed. Furthermore, under the control of terminal controller 770, terminal display unit 750 displays the terminal monitor button, the terminal telephone conversation button, the terminal unlocking button, and the terminal locking button, which are described above.

Various operations for wireless terminal 700 are performed on touch panel unit 760. For example, when the terminal monitor button, the terminal telephone conversation button, the terminal unlocking button, or the terminal unlocking button is displayed on terminal display unit 750, a clicking operation is performed on each of these on touch panel unit 760, and, when the operation is performed, touch panel unit 760 notifies terminal controller 770 that the clicking operation is performed.

When an operation of making a request to start a connection to intercom master device 500 is performed in touch panel unit 760, authentication processing by authentication server 600 is performed on terminal controller 770. When the succession in authentication server 600 succeeds in the authentication, relay of communication between wireless terminal 700 and intercom master device 500 by authentication server 600 is started. When the relay of the communication is started, next, terminal controller 770 transmits a log-in request to intercom master device 500.

When receiving the terminal-destined visiting notification from intercom master device 500, terminal information output unit 771 of terminal controller 770 outputs call sound indicating that a person has come to entrance door 210, from terminal speaker 720. Accordingly, terminal information output unit 771 notifies user 220 that visitor 230 is at entrance door 210. Furthermore, terminal information output unit 771 displays the terminal monitor button, the terminal telephone conversation button, and the terminal unlocking button, which are described above, on terminal display unit 750.

When a checking operation, such as clicking on the terminal monitor button, is performed in wireless terminal 700, telephone conversation controller 772 of terminal controller 770 transmits the request to start the P2P communication to intercom master device 500. Accordingly, the P2P communication between wireless terminal 700 itself and intercom master device 500 is started, telephone conversation controller 772 starts to output the image of the entrance that is sent from intercom master device 500. Audio output, for example, is performed by terminal information output unit 771 outputting a digital signal for the call sound to terminal audio I/F unit 740. Furthermore, the audio output, for example, is performed by terminal information output unit 771 outputting a digital image data from intercom master device 500 to master device side display unit 540.

Furthermore, when a response operation, such as clicking on the terminal telephone conversation button, is performed in wireless terminal 700, telephone conversation controller 772 of terminal controller 770 transmits the telephone conversation starting instruction described above to intercom master device 500, and starts a telephone conversation between wireless terminal 700 and entrance slave device 400 through intercom master device 500. That is, telephone conversation controller 772 outputs the image of the vicinity of the entrance and audio that occurs in the vicinity of the entrance, which are sent from intercom master device 500, from terminal display unit 750 and terminal speaker 720, and transmits audio that occurs in the vicinity of wireless terminal 700, which is input by terminal timer 730, to intercom master device 500.

In a state where the terminal-destined visiting notification is not received, when the checking operation, such as clicking on the terminal monitor button, is performed, telephone conversation controller 772 transmits the image transmission request described above to intercom master device 500. The image of the vicinity of the entrance that is sent from intercom master device 500 in response to the request is output from terminal display unit 750.

When an unlocking instruction operation, such as clicking on the terminal unlocking button, is performed in wireless terminal 700, operation notification unit 773 of terminal controller 770 transmits the terminal's unlocking instruction described above to intercom master device 500.

Furthermore, when locking instruction operation is performed in wireless terminal 700, operation notification unit 773 of terminal controller 770 transmits the terminal's locking instruction to intercom master device 500. The locking instruction operation, for example, is a clicking operation that is performed on the terminal locking button which is displayed on terminal display unit 750.

These functional units of terminal controller 770, for example, are realized by application software that is installed in advance on wireless terminal 700. Furthermore, the transmission and reception of various pieces of information between authentication server 600 and intercom master device 500 by terminal controller 770 described above are performed through terminal wireless unit 710.

With this configuration, when receiving the terminal-destined visiting notification from intercom master device 500, wireless terminal 700 can output information indicating that a person has come to entrance door 210, and when the unlocking instruction operation is performed in wireless terminal 700, can transmit the terminal's unlocking instruction to intercom master device 500.

### Operation of the Intercom Master Device

Next, the operation of intercom master device 500 is described. At this point, a description is provided with a focus on main operation relating to communication with wireless terminal 700.

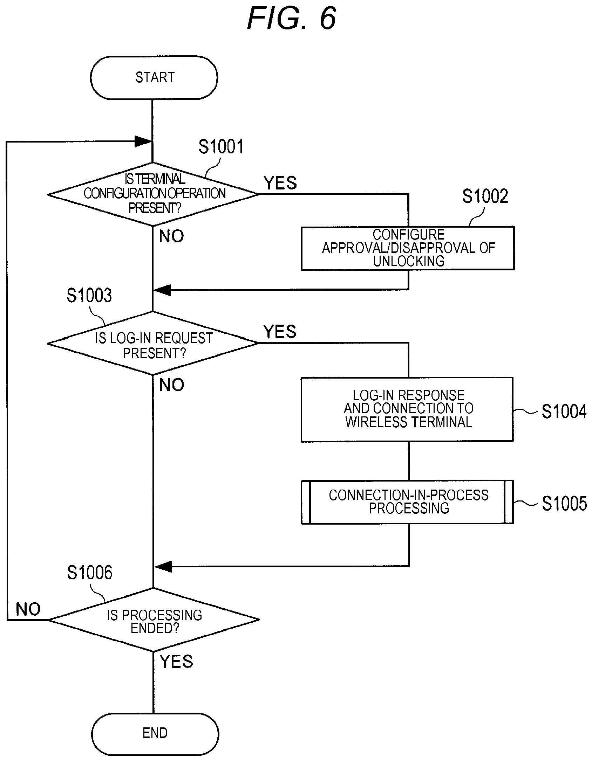

FIG. 6 is a flowchart illustrating an example of the operation of intercom master device 500.

In Step S1001, terminal registration unit 553 determines whether or not to perform a terminal configuration operation. The terminal configuration operation, for example, is an operation in which approval/disapproval of the unlocking operation, which is to be given to any one of wireless terminal 700, is selected on terminal configuration screen on a touch panel-attached display of intercom master device 500, on which terminal registration unit 553 is displayed. Terminal registration unit 553, for example, displays the terminal configuration screen when a prescribed icon that is displayed on the touch panel-attached display of intercom master device 500 is clicked on.

The terminal configuration screen, for example, includes a terminal selection screen for selecting wireless terminal 700 that is an operation target, and a configuration selection screen for selecting the approval/disapproval that is to be given to selected wireless terminal 700.

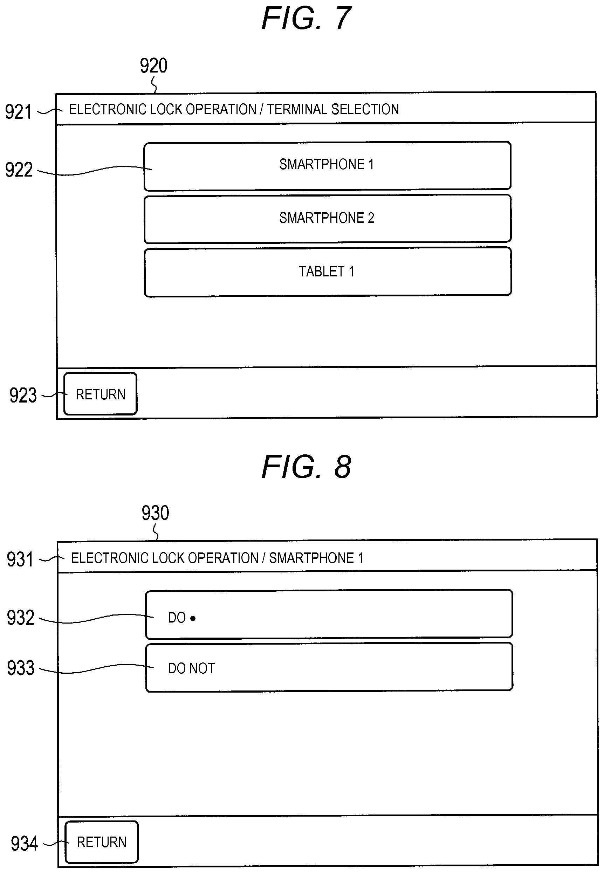

FIG. 7 is a plan diagram illustrating an example of the terminal configuration screen of the terminal selection screen.

As illustrated in FIG. 7, terminal selection screen 920 includes screen information 921 indicating a screen for selecting wireless terminal 700 that is an operation target, and icons 922 to which terminal names of multiple wireless terminals 700 that can be able to make connections to intercom master device 500 are affixed respectively. Furthermore, terminal selection screen 920 includes icon 923 for returning terminal selection screen 920 to a normal screen.

Terminal registration unit 553, for example, generates terminal selection screen 920 referring to terminal name 911 (referring to FIG. 4) of terminal information table 910. When any one of icons 922 to which terminal names of wireless terminals 700 are affixed is clicked on (selected), the terminal registration unit 553 detects this selection, and generates and displays the configuration selection screen for corresponding wireless terminal 700.

FIG. 8 is a plan diagram illustrating an example of the configuration selection screen that is displayed in a case where icon 922 of "SMARTPHONE 1" is selected.

As illustrated in FIG. 8, configuration selection screen 930 includes screen information 931 indicating a screen for selecting to which wireless terminal 700 the approval/disapproval of the unlocking operation is to be given. Furthermore, the configuration selection screen 930 includes icon 932 for determining the approval of the unlocking operation is given to wireless terminal 700 of which the selection is in progress, and icon 933 for determining the approval of the unlocking operation is not given to wireless terminal 700 of which the selection is in progress. Furthermore, icon 934 for returning configuration selection screen 930 to terminal selection screen 920.

In a case where the terminal configuration operation is performed, more precisely, in a case where icons 932 and 933 are clicked on (YES in S1001 in FIG. 6), the terminal registration unit 553 causes the processing to proceed to Step S1002. Furthermore, in a case where the terminal configuration operation is not performed (NO in S1001), the terminal registration unit 553 causes the processing to proceed to Step S1003 that will be described below.

In Step S1002, the terminal registration unit 553 configures the approval/disapproval of the unlocking according to the performed terminal configuration operation.

That is, when icon 932 (refer to FIG. 8) for determining the approval of the unlocking operation is clicked on (selected), the terminal registration unit 553 resets unlocking configuration 916, which corresponds to wireless terminal 700 of which the selection is in progress, to (or maintains) "APPROVAL", in terminal information table 910. Furthermore, when icon 933 (refer to FIG. 8) for determining the disapproval of the unlocking operation is clicked on (selected), the terminal registration unit 553 resets unlocking configuration 916, which corresponds to wireless terminal 700 of which the selection is in progress, to (or maintains) "DISAPPROVAL", in terminal information table 910.

Terminal registration unit 553 may perform prescribed authentication processing on a person who attempts to perform the terminal configuration operation, such as requiring an input of a prescribed password. Accordingly, the terminal configuration operation can be limited to a person (for example, an adult among persons who live in building 200) who is authorized to do so.

In Step S1003, telephone conversation relay unit 552 determines whether or not the log-in request is received from wireless terminal 700. In a case where the log-in request is received (YES in S1003), telephone conversation relay unit 552 causes the processing to proceed to Step S1004. Furthermore, in a case where the log-in request is not received (NO in S1003), telephone conversation relay unit 552 causes the processing to proceed to Step S1006 that will be described below.

In Step S1004, telephone conversation relay unit 552 performs the authentication processing on wireless terminal 700. At this point, a description is provided under the assumption of a case where the success in the authentication takes place. Telephone conversation relay unit 552 transmits a log-in response to wireless terminal 700, and makes a connection to wireless terminal 700. In a case where the authentication fails, intercom master device 500, for example, transmits a response indicating the failure of the authentication to wireless terminal 700, and causes the processing to proceed to Step S1006 that will be described below.

In Step S1005, intercom master device 500 performs connection-in-progress processing for realizing the monitoring of the vicinity of the entrance by wireless terminal 700 and the image-accompanied telephone conversation with entrance slave device 400. The connection-in-progress processing will be described in detail below.

Intercom master device 500 performs the processing in each of Step S1003 to S1005 on every wireless terminal 700.

In Step S1006, intercom master device 500 determines whether or not an instruction to end the processing is provided using a user operation or the like. In a case where the instruction to end the processing is not provided (NO in S1006), intercom master device 500 causes the processing to proceed to Step S1001. Furthermore, in a case where the instruction to end the processing is provided (YES in S1006), intercom master device 500 ends a processing sequence.

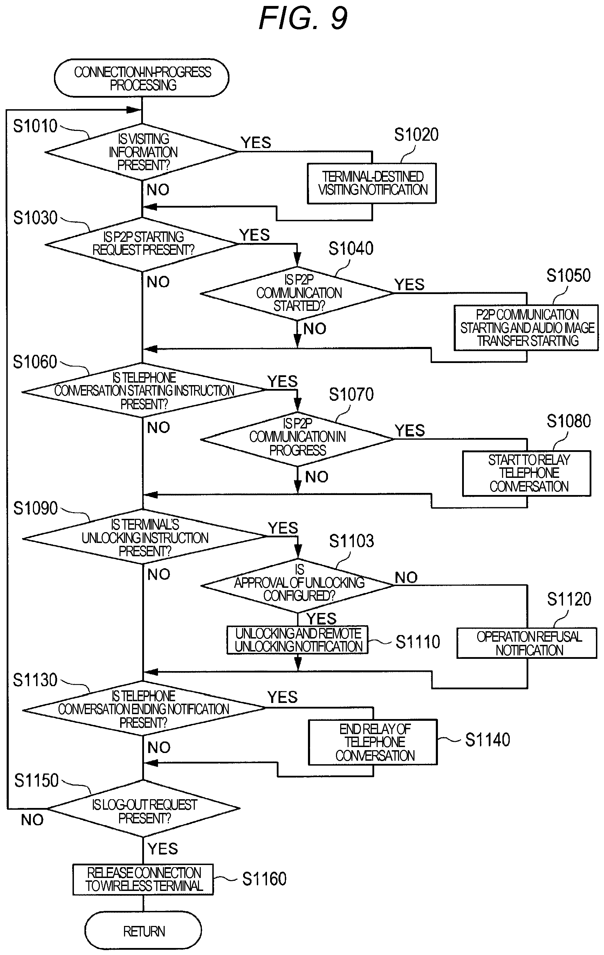

FIG. 9 is a flowchart indicating an example of the connection-in-progress processing (Step S1005 in FIG. 6).

In Step S1010, terminal notification unit 551 determines whether or not the visiting notification is received from entrance slave device 400. In a case where the visiting notification is received (YES in S1010), terminal notification unit 551 causes the processing to proceeds to Step S1020. Furthermore, in a case where the visiting notification is not received (NO in S1010), terminal notification unit 551 causes the process to proceed to Step S1030 that will be described below.

In Step S1020, terminal notification unit 551 transmits the terminal-destined visiting notification to wireless terminal 700 through authentication server 600.

In Step S1030, telephone conversation relay unit 552 determines whether or not a P2P starting request that makes a request to start the P2P communication is received from wireless terminal 700. In a case where the P2P starting request is received (YES in S1030), telephone conversation relay unit 552 causes the processing to proceed to Step S1040. Furthermore, in a case where the P2P starting request is not received (NO in S1030), telephone conversation relay unit 552 causes the processing to proceed to Step S1060 that will be described below.

In Step S1040, telephone conversation relay unit 552 determines whether or not to start the P2P communication with wireless terminal 700. In a case where the P2P communication is started (YES in Step S1040), telephone conversation relay unit 552 causes the processing to proceed to Step S1050. Furthermore, in a case where the P2P communication is not started (NO in Step S1040), telephone conversation relay unit 552 causes the processing to proceed to Step S1060 that will be described below. In the case where the P2P communication is not started, telephone conversation relay unit 552 may transmit an operation refusal notification to wireless terminal 700 in the same manner as in Step S1120 that will be described below.

In Step S1050, telephone conversation relay unit 552 starts the P2P communication and starts to transfer an audio image that is sent from entrance slave device 400, to wireless terminal 700. However, telephone conversation relay unit 552 may not necessarily start transfer the audio.

In Step S1060, telephone conversation relay unit 552 determines whether or not the telephone conversation starting instruction is received from wireless terminal 700. In a case where the telephone conversation starting instruction is received (YES in S1060), telephone conversation relay unit 552 causes the processing to proceed to Step S1070. Furthermore, in a case where the telephone conversation starting instruction is not received (NO in S1060), telephone conversation relay unit 552 causes the processing to proceed to Step S1090 that will be described below.

In Step S1070, telephone conversation relay unit 552 determines whether or not the P2P communication with wireless terminal 700 is started. In a case where the P2P communication is started (YES in S1070), telephone conversation relay unit 552 causes the processing to proceed to Step S1080. Furthermore, in a case where the P2P communication is not started (NO in S1070), telephone conversation relay unit 552 causes the processing to proceed to Step S1090 that will be described below. In the case where the P2P communication is not started, telephone conversation relay unit 552 may transmit the operation refusal notification to wireless terminal 700 in the same manner as in Step S1120 that will be described below.

In Step S1080, telephone conversation relay unit 552 starts telephone conversation relay (transfer of audio data and image data) between entrance slave device 400 and wireless terminal 700.

In Step S1090, electronic lock controller 554 determines whether or not the terminal's unlocking instruction is received from wireless terminal 700. In a case where the terminal's unlocking instruction is received (YES in S1090), electronic lock controller 554 causes the processing to proceed to Step S1103. Furthermore, in a case where the terminal's unlocking instruction is not received (NO in S1090), electronic lock controller 554 causes the processing to proceed to Step S1130 that will be described below.

In Step S1103, electronic lock controller 554 refers to terminal information table 910 (refer to FIG. 4), and determines whether or not the approval of the operation of unlocking electronic lock 300 is configured for wireless terminal 700 that is the transmission source of the terminal's unlocking instruction. Electronic key controller 554, for example, specifies the transmission source of the terminal's unlocking instruction, based on ID information on the transmission source, which is included in terminal's unlocking instruction. In a case where the approval of the unlocking operation is configured (YES in S1103), electronic lock controller 554 causes the processing to proceed to Step S1110. Furthermore, in a case where the approval of the unlocking operation is not configured (NO in S1103), electronic lock controller 554 causes the processing to proceed to Step S1120.

In Step S1110, electronic lock controller 554 unlocks electronic lock 300 and transmits a terminal-destined unlocking notification to wireless terminal 700. Electronic lock controller 554 may transmit the unlocking request to electronic lock 300, and based on the fact that electronic lock 300 replies with an unlocking response indicating that the unlocking is performed, may determine that the unlocking is performed.

In S1120, electronic lock controller 554 transmits the operation refusal notification to wireless terminal 700 without unlocking electronic lock 300.

In Step S1130, telephone conversation relay unit 552 determines whether or not a telephone conversation ending notification is received. For example, in a case where an operation of ending a telephone conversation is performed in wireless terminal 700, the telephone conversation ending notification is transmitted from wireless terminal 700. In a case where the telephone conversation ending notification is received (YES in S1130), telephone conversation relay unit 552 causes the processing to proceed to Step S1140. Furthermore, in a case where the telephone conversation ending notification is not received (NO in Step S1130), telephone conversation relay unit 552 causes the processing to proceed to Step S1150.

In Step S1140, telephone conversation relay unit 552 ends the telephone conversation relay between entrance slave device 400 and wireless terminal 700.

In Step S1150, master device side controller 550 determines whether or not a log-out request is received. For example, in a case where a log-out operation is performed in wireless terminal 700, the log-out request is transmitted from wireless terminal 700. In a case where the log-out request is not received (NO in S1150), master device side controller 550 causes the processing to return to Step S1010. Furthermore, in a case where the log-out request is received (YES in S1150), master device side controller 550 causes the processing to proceed to Step S1160.

In Step S1160, master device side controller 550 releases the connection to wireless terminal 700, and causes the processing to return to S1006 in FIG. 6.

With this operation, intercom master device 500 makes a connection to wireless terminal 700 that is carried outside of building 200 in a manner that makes it possible to communicate with wireless terminal 700, and the identifying of visitor 230 at entrance door 210, the telephone conversation with visitor 230, and the operation of unlocking entrance door 210 are possible from wireless terminal 700. Furthermore, an operation of configuring whether or not which the unlocking operation is approved for the performance by every wireless terminal 700 is performed on intercom master device 500, and intercom master device 500 can limit the unlocking operation according to contents of the configuration.

### Operation of the System

Last, operation of intercom system 100 is described.

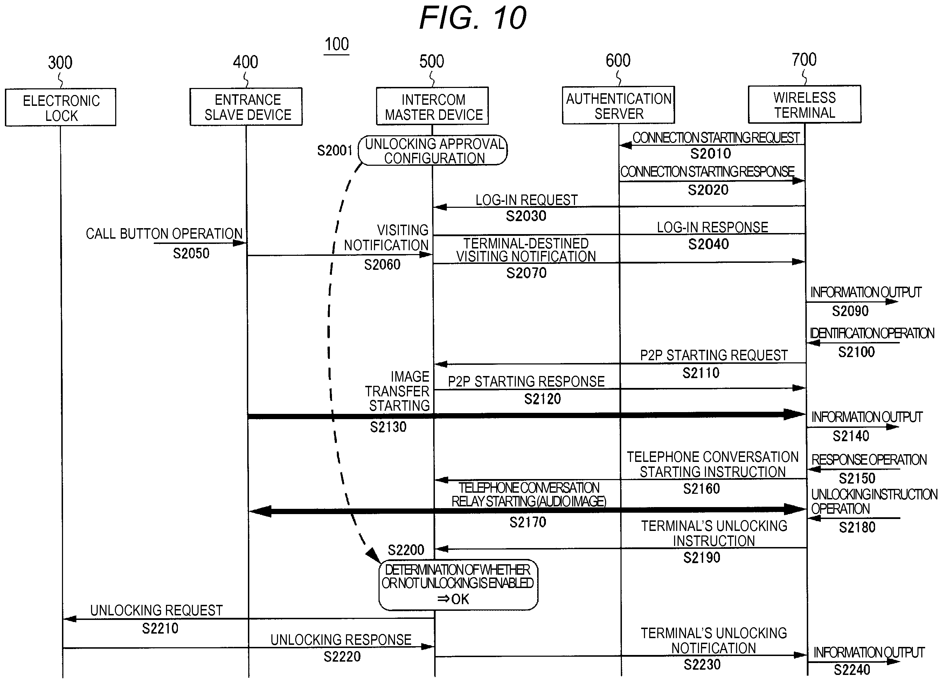

FIG. 10 is a sequence diagram illustrating an example of the operation of intercom system 100, and illustrates an example of a case where the unlocking operation is performed by wireless terminal 700 for which the approval of the unlocking is configured.

In intercom master device 500, the approval of the operation of unlocking electronic lock 300 is configured for certain wireless terminal 700 (S2001). In wireless terminal 700, when application software for checking the vicinity of the entrance and operating electronic lock 300 of entrance door 210, a connection starting request is transmitted from wireless terminal 700 to authentication server 600 (S2010). When authentication server 600 succeeds in authentication of wireless terminal 700, authentication server 600 replies with a connection starting response (S2020). Accordingly, a state where the relay of the communication by authentication server 600 is possible is attained.

Although not illustrated, intercom master device 500 makes a request to authentication server 600 for the same connection as well when powered on and so forth, and authentication server 600 performs the authentication on intercom master device 500 as well.

In addition, the log-in request is transmitted from wireless terminal 700 to intercom master device 500 (S2030), and when intercom master device 500 succeeds in the authentication of wireless terminal 700, intercom master device 500 replies with a log-in response indicating the success in authentication (S2040).

When in this state, the call button of entrance slave device 400 is operated (S2050), the visiting notification is transmitted to intercom master device 500 (S2060), and the terminal-destined visiting notification is transmitted from intercom master device 500 that receives the visiting notification is transmitted to wireless terminal 700 (S2070). These are notified, and transmission of an audio-accompanied image being acquired in entrance slave device 400 to intercom master device 500 is started as well. In wireless terminal 700 that receives the terminal-destined visiting notification, information indicating that visitor 230 is at entrance door 210 is output (S2090).

When the checking operation is performed by user 220 who receives an information output notifying the presence of a visitor (S2100), the P2P starting request is transmitted from wireless terminal 700 to intercom master device 500 (S2110). Intercom master device 500 replies with a P2P starting response (S2120), and transfer of audio and an image from entrance slave device 400 to wireless terminal 700 is started (S2130). As a result, in wireless terminal 700, an output, such as the image of the vicinity of the entrance, is started (S2140).

It is desirable that at this stage, intercom master device 500 does not output audio which occurs in the vicinity of the entrance. Audio data may be controlled in such a manner that in intercom master device 500, the audio data is not transferred to wireless terminal 700, and may be controlled in such a manner that in wireless terminal 700, the audio data is not audio-output.

FIG, 11 is a plan diagram illustrating an example of a display state of wireless terminal 700 when the terminal-destined visiting notification is received and the checking operation is performed.

As illustrated in FIG, 11, image 811 that is captured in entrance slave device 400 and place icon 812 indicating entrance slave device 400 that is a transmission source of an image are displayed on touch panel-attached liquid crystal display 751 of wireless terminal 700. Furthermore, monitor icon 813 that is the terminal monitor button, telephone conversation icon 814 that is the terminal telephone conversation button, and electronic lock icon 815 that is a button that serves as both of terminal locking button and terminal unlocking button are displayed on touch panel-attached liquid crystal display 751.

When the information output is received and the response operation (clicking on telephone conversation icon 814) is performed by user 220 in wireless terminal 700 (S2150 in FIG. 10), the telephone conversation starting instruction is transmitted from wireless terminal 700 to intercom master device 500 (S2160). As a result, intercom master device 500 starts transfer of audio from wireless terminal 700 to entrance slave device 400 and relay of the telephone communication between wireless terminal 700 and entrance slave device 400 (S2170).

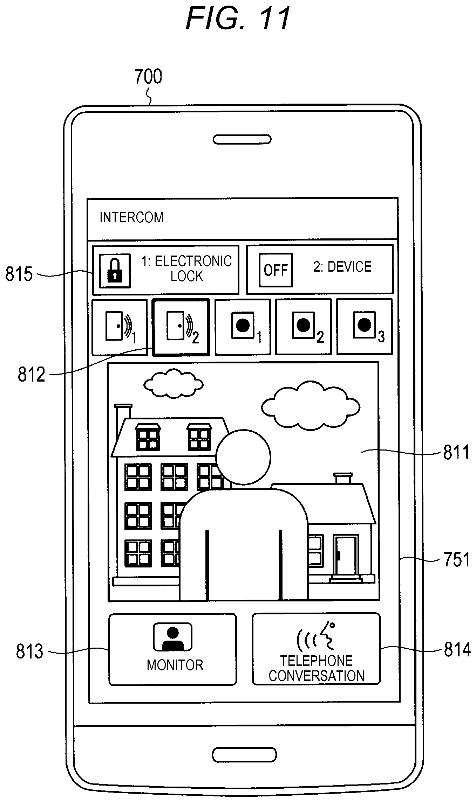

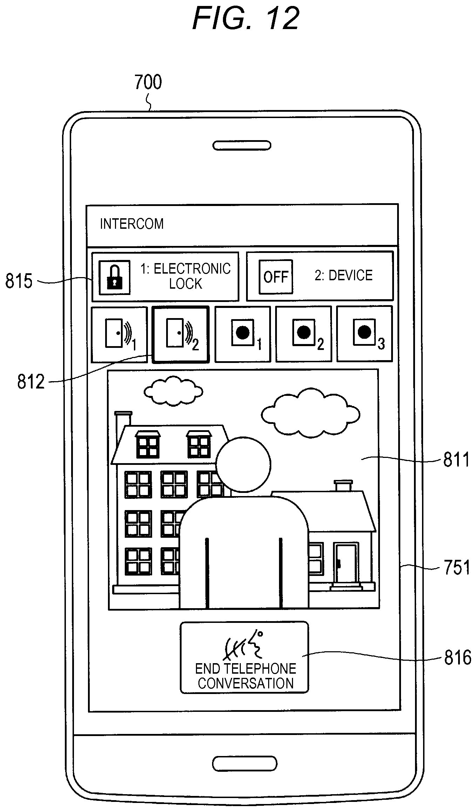

FIG. 12 is a plan diagram illustrating an example of the display state of wireless terminal 700 when the telephone conversation with entrance slave device 400 is started, and corresponds to FIG. 11.

As illustrated in FIG. 12, instead of monitor icon 813 and telephone conversation icon 814 in FIG. 11, telephone conversation ending icon 816 for performing an operation of ending a telephone conversation is displayed on touch panel-attached liquid crystal display 751 of wireless terminal 700.

When the unlocking instruction operation (clicking on electronic lock icon 815) is performed, by user 220 who identifies visitor 230, in wireless terminal 700 (S2180 in FIG. 10), the terminal's unlocking instruction is transmitted from wireless terminal 700 to intercom master device 500 (S2190). In order to prevent the unlocking instruction operation from being performed erroneously, when performing the unlocking instruction operation, wireless terminal 700 may display a pop screen for the double-checking of the operation by user 220.

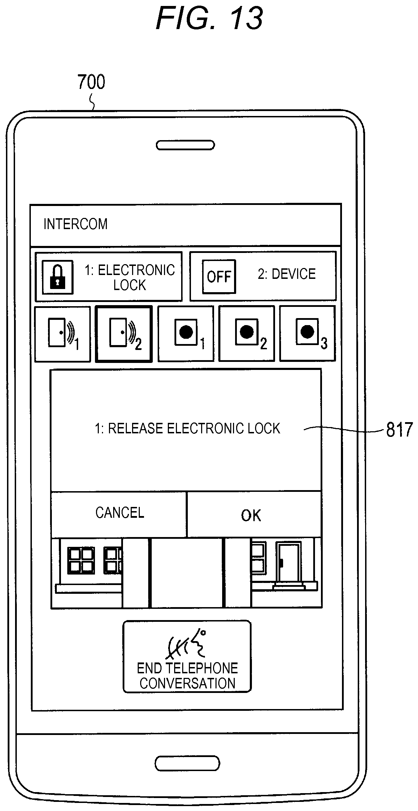

FIG. 13 is a plan diagram illustrating an example of the display state of wireless terminal 700 when the unlocking instruction operation is performed, and corresponds to FIGs. 11 and 12.

As illustrated in FIG. 13, pop screen 817 for checking the unlocking instruction operation is displayed on touch panel-attached liquid crystal display 751 of wireless terminal 700. Operation notification unit 773 of wireless terminal 700 transmits the terminal's unlocking instruction to intercom master device 500 under the condition that an operation (clicking on an OK button) indicating that the unlocking is intended is performed on pop screen 817.

Because the approval of the unlocking operation is configured for wireless terminal 700 that transmits terminal's unlocking instruction, the result of determining whether or not the unlocking is enabled in intercom master device 500 is that the unlocking is approved (OK) (S2200 in FIG. 10), and the unlocking request is transmitted from intercom master device 500 to electronic lock 300 (S2210).

In electronic lock 300 that receives the unlocking request, the unlocking of entrance door 210 is performed, and the unlocking response indicating that the unlocking is completed is sent as a response to intercom master device 500 (S2220). The terminal-destined unlocking notification is transmitted from intercom master device 500 wireless terminal 700 (S2230), and information indicating that the unlocking operation succeeds is output from wireless terminal 700 (S2240).

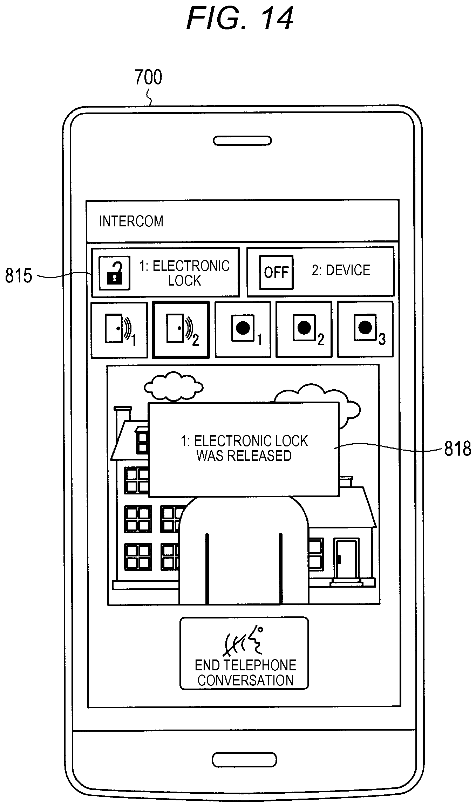

FIG. 14 is a plan diagram illustrating an example of the display state of wireless terminal 700 when the unlocking operation succeeds, and corresponds to FIGs. 11 to 13.

As illustrated in FIG. 14, pop screen 818 indicating that the unlocking of electronic lock 300 succeeds is displayed on touch panel-attached liquid crystal display 751 of wireless terminal 700. Furthermore, the touch panel-attached liquid crystal display 751 changes electronic lock icon 815 in FIGs. 11 to 13 from an external appearance indicating that electronic lock 300 is locked to an external appearance indicating that electronic lock 300 is unlocked.

With this operation, intercom system 100 can unlock electronic lock 300 of entrance door 210 according to an operation by user 220 in wireless terminal 700 for which the approval of the unlocking is configured.

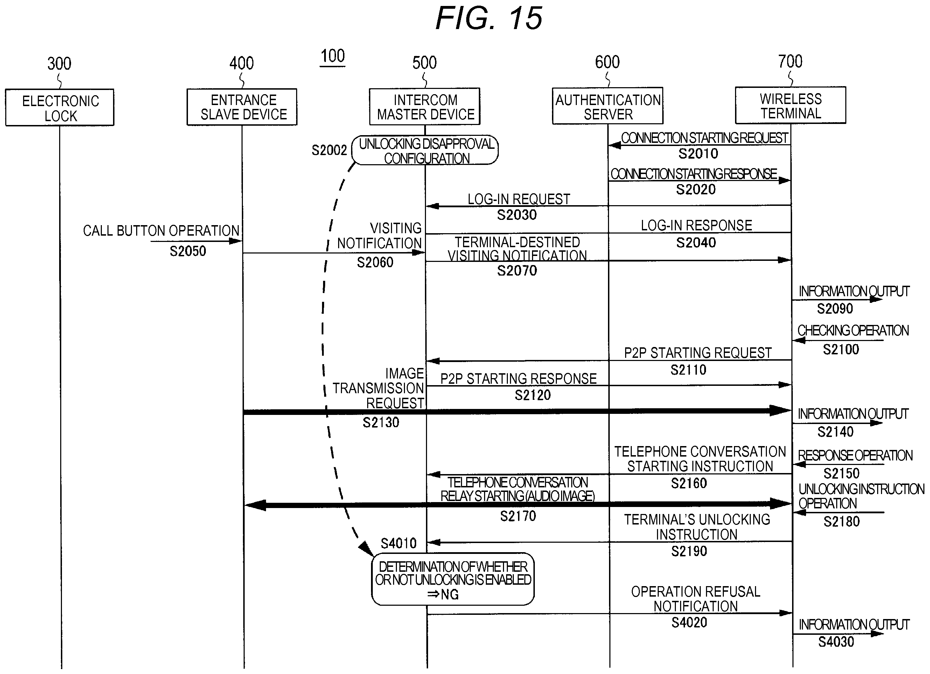

FIG. 15 is a sequence diagram illustrating an example of the operation of intercom system 100, and illustrates an example of a case where the unlocking operation is performed by wireless terminal 700 for which the approval of the unlocking is not configured. The same step number is given to the same portion as in FIG. 10, and a description thereof is omitted.

In intercom master device 500, the disapproval of the operation of unlocking electronic lock 300 is configured for certain wireless terminal 700 (S2002). In wireless terminal 700, when the unlocking instruction operation is performed by a user (user 220) of wireless terminal 700 (S2180), as described above, the terminal's unlocking instruction is transmitted from wireless terminal 700 to intercom master device 500 (S2190). However, because the approval of the unlocking is not configured for wireless terminal 700, the result of determining in intercom master device 500 whether or not the unlocking is enabled is that the unlocking is not approved (NG) (S4010). The operation refusal notification is transmitted from intercom master device 500 to wireless terminal 700 (S4020), and information indicating that the unlocking fails (an operational error) is output from wireless terminal 700 (S4030).

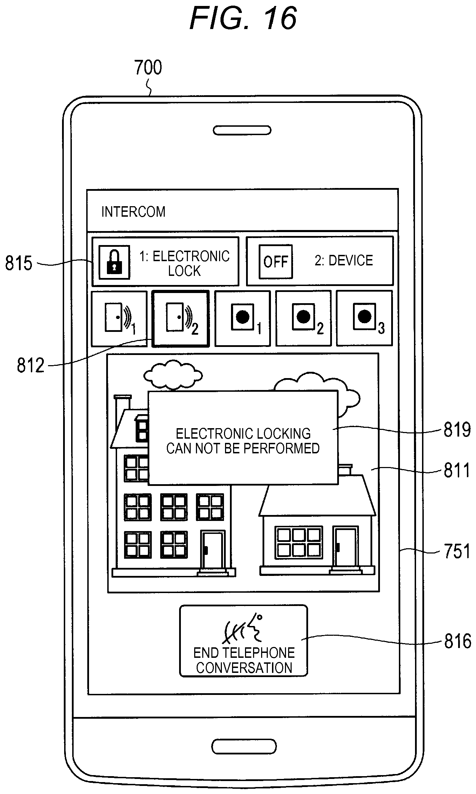

FIG. 16 is a plan diagram illustrating an example of the display state of wireless terminal 700 when the unlocking operation fails, and corresponds to FIGs. 11 to 14.

As illustrated in FIG. 16, pop screen 819 indicating that the unlocking of electronic lock 300 fails is displayed on touch panel-attached liquid crystal display 751 of wireless terminal 700.

With this operation, intercom system 100 can prohibit the unlocking of electronic lock 300 of entrance door 210 that is based on the operation of wireless terminal 700 for which the approval of the unlocking is not configured.

### Effects According to the Present Embodiment

As described above, intercom system 100 according to the present disclosure includes electronic lock 300 that is provided to entrance door 210 of building 200, entrance slave device 400 that is installed in the vicinity of entrance door 210, intercom master device 500 that is installed inside of building 200, and wireless terminal (communication terminal) 700 that is possible to carry outside of building 200.

When it is detected that a person has come to entrance door 210, entrance slave device 400 transmits the visiting notification to intercom master device 500, and when receiving the visiting notification, intercom master device 500 transmits the terminal-destined visiting notification to wireless terminal 700. When receiving the terminal-destined visiting notification, wireless terminal 700 outputs the information indicating that a person has come to entrance door 210, and when the unlocking instruction operation is performed in wireless terminal 700, transmits the terminal's unlocking instruction to intercom master device 500. The operation of configuring whether or not to approve the operation of unlocking electronic lock 300, which is performed by wireless terminal 700, is performed on intercom master device 500, and when receiving the terminal's unlocking instruction, intercom master device 500 unlocks electronic lock 300 under the condition that the approval of the unlocking operation is configured. That is, although the terminal's unlocking instruction is received, in a case where the approval of the unlocking is not configured for wireless terminal 700 that is the destination source of the terminal's unlocking instruction, intercom master device 500 does not unlock entrance door 210.

Accordingly, whether or not to enable the unlocking is configured for intercom system 100 according to the present disclosure, while intercom system 100 makes it possible to unlock entrance door 210 with the operation from wireless terminal 700. Therefore, intercom system 100 can perform the operation of unlocking the entrance door from the communication terminal, in a state where a higher level of security is achieved compared with that in the related art.

### Modification Example of the Present Embodiment

A constitution of each device that makes it possible for the device to make a connection is not limited to the example described above. For example, wireless terminal 700 may perform directly the communication with intercom master device 500 or wireless communication router 610, using short- or middle-distance wireless communication, such as WiFi (a registered trademark) or a wireless LAN.

Furthermore, intercom master device 500 may perform the same processing as for the locking operation, as wells as for the unlocking operation. That is, the operation of configuring whether or not to approve the operation of locking electronic lock 300, which is performed by wireless terminal 700, is performed on intercom master device 500, and when receiving the terminal's locking instruction, intercom master device 500 may lock electronic lock 300 under the condition that the approval of the locking operation is configured.

Furthermore, intercom master device 500 may not transmit the terminal-destined visiting notification to wireless terminal 700 for which the disapproval of the unlocking is configured.

Furthermore, the communication terminal that receives the terminal-destined visiting notification from entrance slave device 400 and performs the information output, and that transmits the terminal's unlocking instruction to intercom master device 500 when the unlocking instruction operation is performed is not limited to the example described above. The communication terminal may be a tablet type information terminal or a notebook personal computer, and may be a desktop type personal computer that is installed outside of building 200.

Furthermore, the device on which the operation of configuring whether or not to approve the operation of unlocking electronic lock 300, which is performed by wireless terminal 700, is performed is assumed to be intercom master device 500 according to the embodiment, which is described above, and is not limited to this. For example, in authentication server 600, wireless communication router 610, or wireless terminal 700, after the configuration operation is performed, information indicating contents of the performed configuration may be transmitted to intercom master device 500. Even in this case, the operation of configuring whether or not to approve the operation of unlocking electronic lock 300, which is wireless terminal 700, is indirectly performed on intercom master device 500 through a different device.

Furthermore, the device that imposes a limitation on the unlocking that depends on whether or not to configure the approval of the unlocking operation is assumed to be intercom master device 500 according to the embodiment, which is described above, but is limited to this. For example, in authentication server 600, wireless communication router 610, or wireless terminal 700, the terminal's unlocking instruction may be transmitted or transferred to intercom master device 500 under the condition that the approval of the unlocking is configured for the transmission source of the terminal's unlocking instruction. Even in these cases, as a result, intercom master device 500 performs the operation of unlocking electronic lock 300 under the condition that an instruction from wireless terminal 700 for which the approval of the unlocking operation is configured is received. However, the configuration operation described above is performed on the device that itself imposes the limitation on the unlocking, but needs to be indirectly performed on the device through a different device.

Furthermore, one portion of the constitution of each device, which is described above, may be physically separated from another portion of the constitution of the device. In this case, in these constitutions, there is a need to individually include a communicator for performing the communication with each other. Furthermore, multiple devices may be constituted into one piece, such as when electronic lock 300 and entrance slave device 400 are combined into one device.

## Claims

1. An intercom system (100) that includes an electronic lock (300) that is provided to a door (210) of a building (200), a slave device (400) that is installed in the vicinity of the door (210), an intercom master device (500) that is installed inside of the building (200), and a communication terminal (700) that is possible to carry outside of the building (200) or is installed outside of the building (200),
wherein the intercom master device (500) displays a user interface enabling a user to configure, in a terminal information table (910), whether to approve or to disapprove an operation of unlocking the electronic lock (300) in the event that a terminal's unlocking instruction is received from the communication terminal (700), the terminal's unlocking instruction indicating that an unlocking instruction operation has been performed in the communication terminal (700);
wherein the slave device (400) is adapted to transmit a visiting notification to the intercom master device (500) when it is detected that a person (230) has come to the door (210),
wherein the intercom master device (500) is adapted to transmit a terminal-destined visiting notification to the communication terminal (700) when receiving the visiting notification, wherein said transmission occurs regardless of whether the communication terminal (700) is configured as approved or disapproved,
wherein the communication terminal (700) is adapted to output information indicating that the person (230) has come to the door (210) when receiving the terminal-destined visiting notification and is adapted to transmit a terminal's unlocking instruction to the intercom master device (500) when an unlocking instruction operation is performed in the communication terminal (700), and
wherein, when receiving the terminal's unlocking instruction, the intercom master device (500) is adapted to refer to the terminal information table (910) and to determine whether the communication terminal (700) being the transmission source of the terminal's unlocking instruction is configured as approved or disapproved,
wherein the intercom master device (500) is adapted to unlock the electronic lock (300) under the condition that approval of the unlocking operation is configured for said communication terminal (700).

2. The intercom system (100) of Claim 1,
wherein the intercom master device (500) receives the terminal's unlocking instruction and when the electronic lock (300) is not unlocked, transmits an operation refusal notification to the communication terminal (700), and
wherein, when receiving the operation refusal notification, the communication terminal (700) outputs information indicating an operational error.

3. The intercom system (100) of Claim 1,
wherein configuration of whether or not to approve the unlocking operation with each terminal's unlocking instruction that is individually performed by multiple communication terminals (700) is performed on the intercom master device (500), and the intercom master device (500) receives the terminal's unlocking instruction and determines whether or not the electronic lock (300) is unlocked.

4. The intercom system (100) of Claim 1,
wherein the communication terminal (700) is a wireless terminal (700) that is possible to carry outside of the building (200).

5. An intercom master device (500) for an intercom system (100) which includes an electronic lock (300) that is provided to a door (210) of a building (200), a slave device (400) that is installed in the vicinity of the door (210), an intercom master device (500) that is installed inside of the building (200), and a communication terminal (700) that is possible to carry outside of the building (200) or is installed outside of the building (200), the intercom master device (500) comprising:
a master device wireless unit (542) adapted to enable communication between the intercom master device (500) and the communication terminal (700),
a terminal registration unit (553) displaying a user interface enabling a user to configure, in a terminal information table (9100), whether to approve or to disapprove an operation of unlocking the electronic lock (300) in the event that a terminal's unlocking instruction is received from the communication terminal (700), the terminal's unlocking instruction indicating that an unlocking instruction operation has been performed in the communication terminal (700);
a terminal notification unit (551) adapted to transmit, through the master device wireless unit (542), a terminal-destined visiting notification to the communication terminal (700) when receiving from the slave device (400) a visiting notification indicating that a person (230) has come to the door (210); wherein said transmission occurs regardless of whether the communication terminal (700) is configured as approved or disapproved, and
an electronic lock controller (554) adapted, when receiving the terminal's unlocking instruction from the communication terminal (700) through the master device wireless unit (542), to refer to the terminal information table (910) and to determine whether the communication terminal (700) being the transmission source of the terminal's unlocking instruction is configured as approved or disapproved, wherein said electronic lock controller (554) is further adapted to unlock the electronic lock (300) under the condition that approval of the unlocking operation is configured for said communication terminal (700).

6. A communication method for an intercom system (100) that includes an electronic lock (300) that is provided to a door (210) of a building (200), a slave device (400) that is installed in the vicinity of the door (210), an intercom master device (500) that is installed inside of the building (200), and a communication terminal (700) that is possible to carry outside of the building (200) or is installed outside of the building (200), the method comprising:
a step (S1002, S2001, S2002) of causing the intercom master device (500) to display a user interface enabling a user to configure, in a terminal information table (910), whether to approve or to disapprove an operation of unlocking the electronic lock (300) in the event that a terminal's unlocking instruction is received from the communication terminal (700), the terminal's unlocking instruction indicating that an unlocking instruction operation has been performed in the communication terminal (700);
a step (S2060) of causing the slave device (400) to transmit a visiting notification to the intercom master device (500) when it is detected that a person (230) has come to the door (210);
a step (S2070) of causing the intercom master device (500) to transmit a terminal-destined visiting notification to the communication terminal (700) when receiving the visiting notification, wherein said transmission occurs regardless of whether the communication terminal (700) is configured as approved or disapproved;
a step (S2090) of causing the communication terminal (700) to output information indicating that the person (230) has come to the door (210) when receiving the terminal-destined visiting notification;
a step (S2190) of causing the communication terminal (700) to transmit the terminal's unlocking instruction to the intercom master device (500) when an unlocking instruction operation is performed in the communication terminal (700); and
a step (S2200) of causing the intercom master device (500) to refer to the terminal information table (910) and to determine whether the communication terminal (700) being the transmission source of the terminal's unlocking instruction is configured as approved or disapproved,
a step (SS2210) of causing the intercom master device (500) to unlock the electronic lock (300) under the condition that approval of the unlocking operation is configured for said communication terminal (700).

## Patentansprüche

1. Gegensprechsystem (100) mit einem elektronischen Schloss (300), das an einer Tür (210) eines Gebäudes (200) vorgesehen ist, einer Slave-Vorrichtung (400), die in der Nähe der Tür (210) installiert ist, einer Gegensprech-Master-Vorrichtung (500), die innerhalb des Gebäudes (200) installiert ist, und einem Kommunikationsendgerät (700), das nach außerhalb des Gebäudes (200) gebracht werden kann oder außerhalb des Gebäudes (200) installiert ist,
wobei die Gegensprech-Master-Vorrichtung (500) eine Benutzerschnittstelle anzeigt, die einem Benutzer ermöglicht, in einer Endgeräteinformationstabelle (910) zu konfigurieren, ob eine Bedienung des Öffnens des elektronischen Schlosses (300) zugelassen oder nicht zugelassen wird, wenn eine Öffnungsinstruktion von einem Endgerät von dem Kommunikationsendgerät (700) empfangen wird, wobei die Öffnungsinstruktion des Endgeräts angibt, dass eine Öffnungsinstruktionsbedienung an dem Kommunikationsendgerät (700) vorgenommen wurde,
wobei die Slave-Vorrichtung (400) ausgestaltet ist, eine Besuchsbenachrichtigung an die Gegensprech-Master-Vorrichtung (500) zu übermitteln, wenn erfasst wird, dass eine Person (230) zu der Tür (210) gekommen ist,
wobei die Gegensprech-Master-Vorrichtung (500) ausgestaltet ist, eine an das Endgerät gerichtete Besuchsbenachrichtigung an das Kommunikationsendgerät (700) zu übermitteln, wenn sie die Besuchsbenachrichtigung empfängt, wobei die Übermittlung unabhängig davon erfolgt, ob das Kommunikationsendgerät (700) als zugelassen oder nicht zugelassen konfiguriert ist,
wobei das Kommunikationsendgerät (700) ausgestaltet ist, Information auszugeben, die angibt, dass die Person (230) zu der Tür (210) gekommen ist, wenn die an das Endgerät gerichtete Besuchsbenachrichtigung empfangen wird, und ausgestaltet ist, eine Öffnungsinstruktion des Endgeräts an die Gegensprech-Master-Vorrichtung (500) zu übermitteln, wenn eine Öffnungsinstruktionsbedienung an dem Kommunikationsendgerät (700) vorgenommen wird, und
wobei, wenn sie die Öffnungsinstruktion des Endgeräts empfängt, die Gegensprech-Master-Vorrichtung (500) ausgestaltet ist, auf die Endgeräteinformationstabelle (910) Bezug zu nehmen und zu bestimmen, ob das Kommunikationsendgerät (700), das die Übermittlungsquelle der Öffnungsinstruktion des Endgeräts ist, als zugelassen oder nicht zugelassen konfiguriert ist,
wobei die Gegensprech-Master-Vorrichtung (500) ausgestaltet ist, das elektronische Schloss (300) unter der Bedingung zu öffnen, dass die Zulassung der Öffnungsbedienung für das Kommunikationsendgerät (700) konfiguriert ist.

2. Gegensprechsystem (100) nach Anspruch 1,
wobei die Gegensprech-Master-Vorrichtung (500) die Öffnungsinstruktion des Endgeräts empfängt und, wenn das elektronische Schloss (300) nicht geöffnet wird, eine Bedienungsverweigerungsbenachrichtigung an das Kommunikationsendgerät (700) übermittelt, und
wobei, wenn es die Bedienungsverweigerungsbenachrichtigung empfängt, das Kommunikationsendgerät (700) Information ausgibt, die einen Bedienungsfehler angibt.

3. Gegensprechsystem (100) nach Anspruch 1,
wobei eine Konfiguration, ob die Öffnungsbedienung für eine jede Öffnungsinstruktion eines Endgeräts zugelassen ist oder nicht, die individuell durch mehrere Kommunikationsendgeräte (700) durchgeführt wird, an der Gegensprech-Master-Vorrichtung (500) durchgeführt wird, und die Gegensprech-Master-Vorrichtung (500) die Öffnungsinstruktion des Endgeräts empfängt und bestimmt, ob das elektronische Schloss (300) geöffnet wird.

4. Gegensprechsystem (100) nach Anspruch 1,
wobei das Kommunikationsendgerät (700) ein drahtloses Endgerät (700) ist, das nach außerhalb des Gebäudes (200) getragen werden kann.

5. Gegensprech-Master-Vorrichtung (500) für ein Gegensprechsystem (100) mit einem elektronischen Schloss (300), das an einer Tür (210) eines Gebäudes (200) vorgesehen ist, einer Slave-Vorrichtung (400), die in der Nähe der Tür (210) installiert ist, einer Gegensprech-Master-Vorrichtung (500), die innerhalb des Gebäudes (200) installiert ist, und einem Kommunikationsendgerät (700), das nach außerhalb des Gebäudes (200) getragen werden kann oder außerhalb des Gebäudes (200) installiert ist, wobei die Gegensprech-Master-Vorrichtung (500) umfasst:
eine Master-Vorrichtungsdrahtloseinheit (542), die ausgestaltet ist, eine Kommunikation zwischen der Gegensprech-Master-Vorrichtung (500) und dem Kommunikationsendgerät (700) zu ermöglichen,
eine Endgeräteregistrierungseinheit (553), die eine Benutzerschnittstelle anzeigt, die einem Benutzer ermöglicht, in einer Endgeräteinformationstabelle (9100) zu konfigurieren, ob eine Bedienung des Öffnens des elektronischen Schlosses (300) zugelassen oder nicht zugelassen wird, wenn eine Öffnungsinstruktion eines Endgeräts von dem Kommunikationsendgerät (700) empfangen wird, wobei die Öffnungsinstruktion des Endgeräts angibt, dass eine Öffnungsinstruktionsbedienung an dem Kommunikationsendgerät (700) durchgeführt wurde,
eine Endgerätebenachrichtigungseinheit (551), die ausgestaltet ist, über die Master-Vorrichtungsdrahtloseinheit (542) eine an das Endgerät gerichtete Besuchsbenachrichtigung an das Kommunikationsendgerät (700) zu übermitteln, wenn sie von der Slave-Vorrichtung (400) eine Besuchsbenachrichtigung empfängt, die angibt, dass eine Person (230) zu der Tür (210) gekommen ist, wobei die Übermittlung unabhängig davon erfolgt, ob das Kommunikationsendgerät (700) als zugelassen oder nicht zugelassen konfiguriert ist, und
eine Steuereinheit (554) für das elektronische Schloss, die ausgestaltet ist, wenn sie die Öffnungsinstruktion des Endgeräts von dem Kommunikationsendgerät (700) über die Master-Vorrichtungsdrahtloseinheit (542) empfängt, auf die Endgeräteinformationstabelle (910) Bezug zu nehmen und zu bestimmen, ob das Kommunikationsendgerät (700), das die Übermittlungsquelle der Öffnungsinstruktion des Endgeräts ist, als zugelassen oder nicht zugelassen konfiguriert ist, wobei die Steuereinheit (554) für das elektronische Schloss ferner dazu ausgestaltet ist, das elektronische Schloss (300) unter der Bedingung zu öffnen, dass die Zulassung der Öffnungsbedienung für das Kommunikationsendgerät (700) konfiguriert ist.

6. Kommunikationsverfahren für ein Gegensprechsystem (100) mit einem elektronischen Schloss (300), das an einer Tür (210) eines Gebäudes (200) vorgesehen ist, einer Slave-Vorrichtung (400), die in der Nähe der Tür (210) installiert ist, einer Gegensprech-Master-Vorrichtung (500), die innerhalb des Gebäudes (200) installiert ist, und einem Kommunikationsendgerät (700), das nach außerhalb des Gebäudes (200) gebracht werden kann oder außerhalb des Gebäudes (200) installiert ist, wobei das Verfahren umfasst:
einen Schritt (S1002, S2001, S2002) des Veranlassens der Gegensprech-Master-Vorrichtung (500), eine Benutzerschnittstelle anzuzeigen, die einem Benutzer ermöglicht, in einer Endgeräteinformationstabelle (910) zu konfigurieren, ob eine Bedienung des Öffnens des elektronischen Schlosses (300) zugelassen oder nicht zugelassen wird, wenn eine Öffnungsinstruktion von einem Endgerät von dem Kommunikationsendgerät (700) empfangen wird, wobei die Öffnungsinstruktion des Endgeräts angibt, dass eine Öffnungsinstruktionsbedienung an dem Kommunikationsendgerät (700) vorgenommen wurde,
einen Schritt (S2060) des Veranlassens der Slave-Vorrichtung (400), eine Besuchsbenachrichtigung an die Gegensprech-Master-Vorrichtung (500) zu übermitteln, wenn erfasst wird, dass eine Person (230) zu der Tür (210) gekommen ist,
einen Schritt (S2070) des Veranlassens der Gegensprech-Master-Vorrichtung (500), eine an das Endgerät gerichtete Besuchsbenachrichtigung an das Kommunikationsendgerät (700) zu übermitteln, wenn sie die Besuchsbenachrichtigung empfängt, wobei die Übermittlung unabhängig davon erfolgt, ob das Kommunikationsendgerät (700) als zugelassen oder nicht zugelassen konfiguriert ist,
einen Schritt (S2090) des Veranlassens des Kommunikationsendgeräts (700), Information auszugeben, die angibt, dass die Person (230) zu der Tür (210) gekommen ist, wenn die an das Endgerät gerichtete Besuchsbenachrichtigung empfangen wird,
einen Schritt (S2190) des Veranlassens des Kommunikationsendgeräts (700), die Öffnungsinstruktion des Endgeräts an die Gegensprech-Master-Vorrichtung (500) zu übermitteln, wenn eine Öffnungsinstruktionsbedienung an dem Kommunikationsendgerät (700) vorgenommen wird, und
einen Schritt (S2200) des Veranlassens der Gegensprech-Master-Vorrichtung (500), auf die Endgeräteinformationstabelle (910) Bezug zu nehmen und zu bestimmen, ob das Kommunikationsendgerät (700), das die Übermittlungsquelle der Öffnungsinstruktion des Endgeräts ist, als zugelassen oder nicht zugelassen konfiguriert ist,
einen Schritt (S2210) des Veranlassens der Gegensprech-Master-Vorrichtung (500), das elektronische Schloss (300) zu öffnen, unter der Bedingung, dass die Zulassung der Öffnungsbedienung für das Kommunikationsendgerät (700) konfiguriert ist.

## Revendications

1. Système d'interphone (100) qui comprend une serrure électronique (300) qui est prévue sur une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200),
dans lequel le dispositif maître d'interphone (500) affiche une interface utilisateur permettant à un utilisateur de configurer, dans une table d'informations de terminal (910), s'il convient d'approuver ou de non approuver une opération de déverrouillage de la serrure électronique (300) lorsqu'il est reçu du terminal de communication (700) une instruction de déverrouillage de terminal, l'instruction de déverrouillage de terminal indiquant qu'une opération d'instruction de déverrouillage a été mise en oeuvre sur le terminai de communication (700),
dans lequel le dispositif esclave (400) est adapté pour transmettre au dispositif maître d'interphone (500) une notification de visite lorsqu'il est détecté qu'une personne (230) est venue à la porte (210),
dans lequel le dispositif maître d'interphone (500) est adapté pour transmettre au terminal de communication (700) une notification de visite destinée au terminal, lorsqu'il reçoit la notification de visite, dans lequel ladite transmission a lieu indépendamment du fait que le terminal de communication (700) est configuré comme étant approuvé ou non approuvé,
dans lequel le terminal de communication (700) est adapté pour délivrer de l'information indiquant que la personne (230) est venue à la porte (210) lorsque la notification de visite destinée au terminal est reçue, et est adapté pour transmettre au dispositif maître d'interphone (500) une instruction de déverrouillage de terminal lorsqu'une opération d'instruction de déverrouillage est mise en oeuvre sur le terminal de communication (700), et
dans lequel, lorsqu'il reçoit l'instruction de déverrouillage de terminal, le dispositif maître d'interphone (500) est adapté pour faire référence à la table d'informations de terminal (910) et pour déterminer si le terminal de communication (700) qui est la source de transmission de l'instruction de déverrouillage de terminal est configuré comme étant approuvé ou non approuvé,
dans lequel le dispositif maître d'interphone (500) est adapté pour déverrouiller la serrure électronique (300) à condition que l'approbation de l'opération de déverrouillage soit configurée pour ledit terminal de communication (700).

2. Système d'interphone (100) selon la revendication 1
dans lequel le dispositif maître d'interphone (500) reçoit l'instruction de déverrouillage de terminal, et, lorsque la serrure électronique (300) n'est pas déverrouillée, transmet au terminal de communication (700) une notification de refus d'opération, et
dans lequel, lorsqu'il reçoit la notification de refus d'opération, le terminal de communication (700) délivre de l'information indiquant une erreur opérationnelle.

3. Système d'interphone (100) selon la revendication 1,
dans lequel une configuration pour approuver ou non l'opération de déverrouillage pour chaque instruction de déverrouillage de terminal qui est réalisée individuellement par plusieurs terminaux de communication (700) est mise en oeuvre sur le dispositif maître d'interphone (500), et le dispositif maître d'interphone (500) reçoit l'instruction de déverrouillage de terminal et détermine si la serrure électronique (300) est déverrouillé ou non.

4. Système d'interphone (100) selon la revendication 1,
dans lequel le terminal de communication (700) est un terminal sans fil (700) que l'on peut avoir avec soi à l'extérieur du bâtiment (200).

5. Dispositif maître d'interphone (500) pour un système d'interphone (100) qui comprend une serrure électronique (300) qui est prévue sur une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200), le dispositif maître d'interphone (500) comprenant:
une unité sans fil de dispositif maître (542) adaptée pour permettre une communication entre le dispositif maître d'interphone (500) et le terminal de communication (700),
une unité d'enregistrement de terminal (553) affichant une interface utilisateur permettant à un utilisateur de configurer, dans une table d'informations de terminal (9100), s'il convient d'approuver ou de non approuver une opération de déverrouillage de la serrure électronique (300) lorsqu'il est reçu du terminal de communication (700) une instruction de déverrouillage de terminal, l'instruction de déverrouillage de terminal indiquant qu'une opération d'instruction de déverrouillage a été mise en oeuvre sur le terminai de communication (700),
une unité de notification de terminal (551) adaptée pour transmettre au terminal de communication (700), par l'intermédiaire de l'unité sans fil de dispositif maître (542), une notification de visite destinée au terminal, lorsqu'elle reçoit, en provenance du dispositif esclave (400), une notification de visite indiquant qu'une personne (230) est venue à la porte (210), dans lequel ladite transmission a lieu indépendamment du fait que le terminal de communication (700) est configuré comme étant approuvé ou non approuvé, et
une unité de commande (554) de la serrure électronique, qui est adaptée, lorsqu'elle reçoit l'instruction de déverrouillage de terminal en provenance du terminal de communication (700) par l'intermédiaire de l'unité sans fil de dispositif maître (542), pour faire référence à la table d'informations de terminal (910) et pour déterminer si le terminal de communication (700) qui est la source de transmission de l'instruction de déverrouillage de terminal est configuré comme étant approuvé ou non approuvé, dans lequel ladite unité de commande (554) de la serrure électronique est en outre adaptée pour déverrouiller la serrure électronique (300) à condition que l'approbation de l'opération de déverrouillage soit configurée pour ledit terminal de communication (700).

6. Procédé de communication pour un système d'interphone (100) qui comprend une serrure électronique (300) qui est prévue sur une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200), le procédé comprenant:
une étape (S1002, S2001, S2002) consistant à amener le dispositif maître d'interphone (500) à afficher une interface utilisateur permettant à un utilisateur de configurer, dans une table d'informations de terminal (910), s'il convient d'approuver ou de non approuver une opération de déverrouillage de la serrure électronique (300) lorsqu'il est reçu du terminal de communication (700) une instruction de déverrouillage de terminal, l'instruction de déverrouillage de terminal indiquant qu'une opération d'instruction de déverrouillage a été mise en oeuvre sur le terminal de communication (700),
une étape (S2060) consistant à amener ledit dispositif esclave (400) à transmettre au dispositif maître d'interphone (500) une notification de visite lorsqu'il est détecté qu'une personne (230) est venue à la porte (210),
une étape (S2070) consistant à amener le dispositif maître d'interphone (500) à transmettre au terminal de communication (700) une notification de visite destinée au terminal, lorsqu'il reçoit la notification de visite, dans lequel ladite transmission a lieu indépendamment du fait que le terminal de communication (700) est configuré comme étant approuvé ou non approuvé,
une étape (S2090) consistant à amener le terminal de communication (700) à délivrer de l'information indiquant que la personne (230) est venue à la porte (210), lorsque la notification de visite destinée au terminal est reçue,
une étape (S2190) consistant à amener le terminal de communication (700) à transmettre au dispositif maître d'interphone (500) l'instruction de déverrouillage de terminal lorsqu'une opération d'instruction de déverrouillage est mise en oeuvre sur le terminal de communication (700), et
une étape (S2200) consistant à amener le dispositif maître d'interphone (500) à faire référence à la table d'informations de terminal (910) et à déterminer si le terminal de communication (700) constituant la source de transmission de l'instruction de déverrouillage de terminal est configuré comme étant approuvé ou non approuvé,
une étape (S2210) consistant à amener le dispositif maître d'interphone (500) à déverrouiller la serrure électronique (300) à condition que l'approbation de l'opération de déverrouillage soit configurée pour ledit terminal de communication (700).
